# EUROPEAN PATENT SPECIFICATION

(11) **EP 3 139 723 B1**
(45) Date of publication and mention of the grant of the patent: **01.07.2020**
(21) Application number: 15789149.0
(22) Date of filing: 07.05.2015
(51) Int. Cl.: A01C 5/00, A01C 5/06, A01C 7/00, A01C 23/02, A01B 79/00, A01C 21/00, A01C 7/06, A01C 7/20

(54) **APPARATUS FOR AGRICULTURAL LIQUID APPLICATION**
VORRICHTUNG FÜR LANDWIRTSCHAFTLICHE FLÜSSIGKEITSANWENDUNG
APPAREIL POUR APPLICATION DE LIQUIDE AGRICOLE

(30) Priority: 08.05.2014 US 201461990404 P; 06.10.2014 US 201462060392 P; 24.03.2015 US 201562137551 P
(43) Date of publication of application: 15.03.2017
(60) Divisional application: 20161235.5
(73) Proprietor: Precision Planting LLC, Tremont, IL 61568 (US)
(72) Inventor: STOLLER, Jason, Eureka, IL 61530 (US); MCMAHON, Brian, Deer Creek, IL 61733 (US)
(74) Representative: AGCO Intellectual Property Department
(86) International application number: PCT/US2015/029719
(87) International publication number: WO 2015/171915

(56) References cited:
- WO-A1-2012/106544
- CA-A1- 2 438 271
- US-A- 5 865 131
- US-A1- 2002 000 476
- US-A1- 2002 043 197
- US-A1- 2008 110 088
- US-A1- 2009 112 475
- US-A1- 2009 112 475
- US-A1- 2012 167 809
- US-A1- 2013 250 305
- US-A1- 2014 076 215

## Description

### BACKGROUND

In recent years, the availability of advanced location-specific agricultural application and measurement systems (used in so-called "precision farming" practices) has increased grower interest in applying fertilizer and other liquids at the appropriate location during the planting operation. Commercial solutions have included applying liquid on top of seeds in the planting trench, which may cause deleterious effects such as "burning" (i.e., over-fertilizing) seed. Other solutions have included opening a separate trench in the soil surface (disposed between the planting trenches opened by the row unit) and depositing liquid in the separate vertical trench, which may result in underutilization of applied fertilizer.

Thus there is a need in the art for a method for effectively applying liquid during the planting operation.
US 2012/0167809 A1 discloses a dispensing device for delivering fluid fertilizer into a furrow in the soil of an agricultural field, the device having a bottom end extending downwardly into the furrow, an inlet port for receiving fluid and two outlet ports for discharging fluid into different regions of the furrow, the device having abrupt changes in transverse width forming a pair of wings to pull the device downwardly into the soil.
US 2014/076215 A1 discloses a seed firmer with a pusher attachment that extends the life of the seed firmer.
In accordance with the invention there is provided a liquid application apparatus for applying liquid to soil during a planting operation, as defined by the appended claims.

### DESCRIPTION OF THE DRAWINGS

FIG. 1 is a top view of an embodiment of an agricultural planter.
FIG. 2 is a side elevation view of an embodiment of a planter row unit.
FIG. 3 schematically illustrates an embodiment of a soil monitoring system.
FIG. 4A is a side elevation view of a seed firmer not belonging to the present invention, having a plurality of firmer-mounted sensors.
FIG. 4B is a plan view of the seed firmer of FIG. 4A.
FIG. 4C is a rear elevation view of the seed firmer of FIG. 4A.
FIG 5 is a side elevation view of another seed firmer not belonging to the present invention, having a plurality of firmer-mounted sensors.
FIG. 6 is a sectional view along section D-D of FIG. 5.
FIG. 7 is a sectional view along section E-E of FIG. 5.
FIG. 8 is a sectional view along section F-F of FIG. 5.
FIG. 9 is a sectional view along section G-G of FIG. 5.
FIG. 10 is a partially cutaway partial side view of the seed firmer of FIG. 5.
FIG. 11 is a view along direction A of FIG. 10.
FIG. 12 is a view along section B-B of FIG. 10.
FIG. 13 is a view along section C-C of FIG. 10.
FIG. 14 is an enlarged partial cutaway view of the seed firmer of FIG. 5.
FIG. 15 is a rear view of another seed firmer, not belonging to the present invention.
FIG. 16 is a rear view of still another seed firmer, not belonging to the present invention.
FIG. 17 is a plot of a reflectivity sensor signal.
FIG. 18 is a side elevation view of an embodiment of a reference sensor.
FIG. 19A is a side elevation view of an embodiment of an instrumented seed firmer not belonging to the present invention, incorporating fiber-optic cable transmitting light to a reflectivity sensor.
FIG. 19B is a side elevation view of an instrumented seed firmer not belonging to the present invention, incorporating fiber-optic cable transmitting light to a spectrometer.
FIG. 20 illustrates an embodiment of a soil data display screen.
FIG. 21 illustrates an embodiment of a spatial map screen.
FIG. 22 illustrates an embodiment of a seed planting data display screen.
FIG. 23 is a side elevation view of another embodiment of a reference sensor having an instrumented shank.
FIG. 24 is a front elevation view of the reference sensor of FIG. 23.
FIG. 25 is a side elevation view of another seed firmer, not belonging to the present invention.
FIG. 26 is a side cross-sectional view of the seed firmer of FIG. 25.
FIG. 27 is a side elevation view of a seed firmer having transverse trench-engaging extrusions.
FIG. 28 is a rear view of the seed firmer of FIG. 27.
FIG. 29 is a side elevation view of a remote trench characteristic sensing system.
FIG. 30 is a side elevation view of a seed firmer not belonging to the present invention, mounted to a mounting bracket.
FIG. 31 is a perspective view of a seed firmer according to the present invention.
FIG. 32 is a side elevation view of the seed firmer of FIG. 31 with a wing body and manifold removed.
FIG. 33 is a side elevation view of the seed firmer of FIG. 31.
FIG. 34 is a perspective view of a wing body and manifold of the seed firmer of FIG. 31
FIG. 35 is a rear elevation view of the seed firmer of FIG. 31.
FIG. 36 is a cross-sectional view of the seed firmer of FIG. 31 along the cross-section A-A of FIG. 33.
FIG. 37 schematically illustrates another embodiment of a soil monitoring system.

### DESCRIPTION

### Depth Control and Soil Monitoring Systems

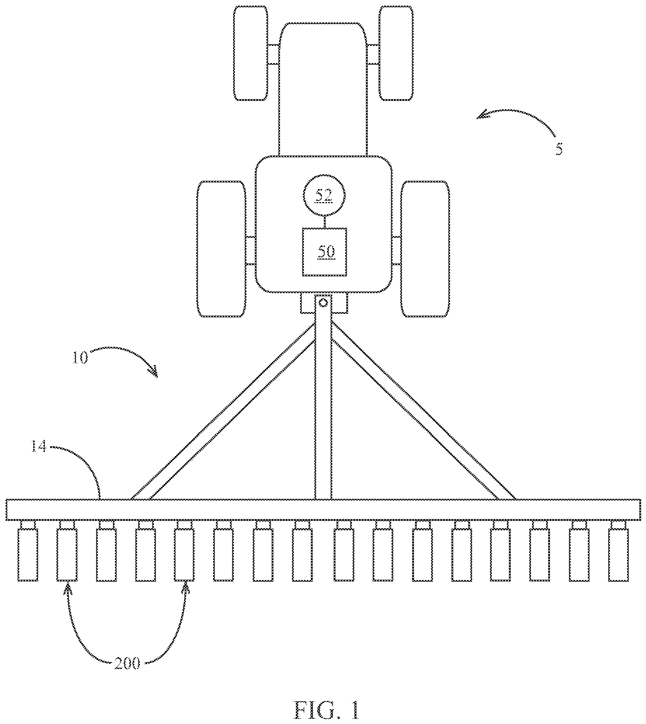

Referring now to the drawings, wherein like reference numerals designate identical or corresponding parts throughout the several views, FIG. 1 illustrates a tractor 5 drawing an agricultural implement, e.g., a planter 10, comprising a toolbar 14 operatively supporting multiple row units 200. An implement monitor 50 preferably including a central processing unit ("CPU"), memory and graphical user interface ("GUI") (e.g., a touch-screen interface) is preferably located in the cab of the tractor 5. A global positioning system ("GPS") receiver 52 is preferably mounted to the tractor 5.

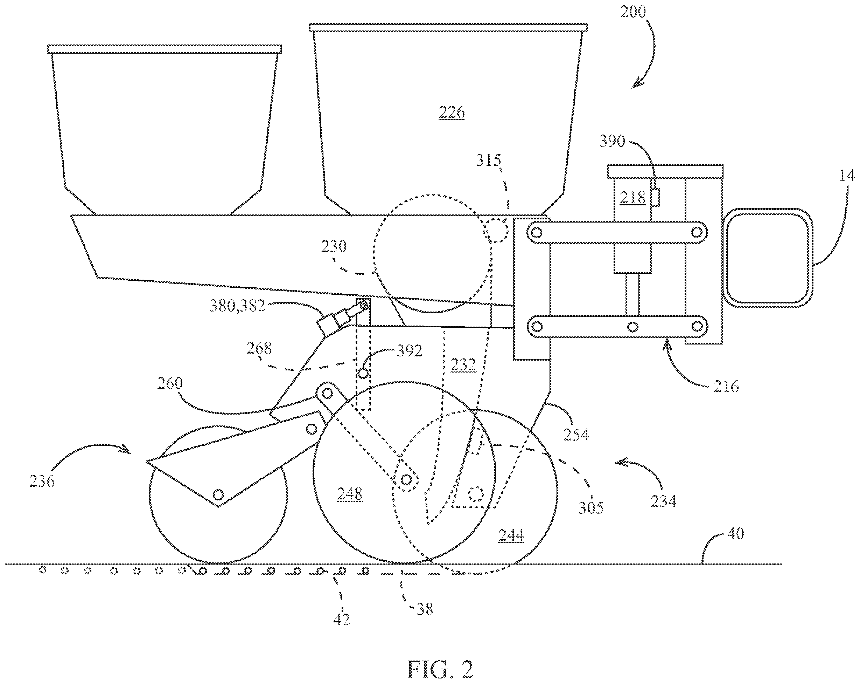

Turing to FIG. 2, an embodiment is illustrated in which the row unit 200 is a planter row unit. The row unit 200 is preferably pivotally connected to the toolbar 14 by a parallel linkage 216. An actuator 218 is preferably disposed to apply lift and/or downforce on the row unit 200. A solenoid valve 390 is preferably in fluid communication with the actuator 218 for modifying the lift and/or downforce applied by the actuator. According to the invention the opening system 234 includes two opening discs 244 rollingly mounted to a downwardly-extending shank 254 and disposed to open a v-shaped trench 38 in the soil 40. A pair of gauge wheels 248 is pivotally supported by a pair of corresponding gauge wheel arms 260; the height of the gauge wheels 248 relative to the opener discs 244 sets the depth of the trench 38. A depth adjustment rocker 268 limits the upward travel of the gauge wheel arms 260 and thus the upward travel of the gauge wheels 248. A depth adjustment actuator 380 is preferably configured to modify a position of the depth adjustment rocker 268 and thus the height of the gauge wheels 248. The actuator 380 is preferably a linear actuator mounted to the row unit 200 and pivotally coupled to an upper end of the rocker 268. In some embodiments the depth adjustment actuator 380 comprises a device such as that disclosed in International Patent Application No. PCT/US2012/035585 ("the '585 application"). An encoder 382 is preferably configured to generate a signal related to the linear extension of the actuator 380; it should be appreciated that the linear extension of the actuator 380 is related to the depth of the trench 38 when the gauge wheel arms 260 are in contact with the rocker 268. A downforce sensor 392 is preferably configured to generate a signal related to the amount of force imposed by the gauge wheels 248 on the soil 40; in some embodiments the downforce sensor 392 comprises an instrumented pin about which the rocker 268 is pivotally coupled to the row unit 200, such as those instrumented pins disclosed in Applicant's U.S. Patent Application No. 12/522,253 (Pub. No. US 2010/0180695).

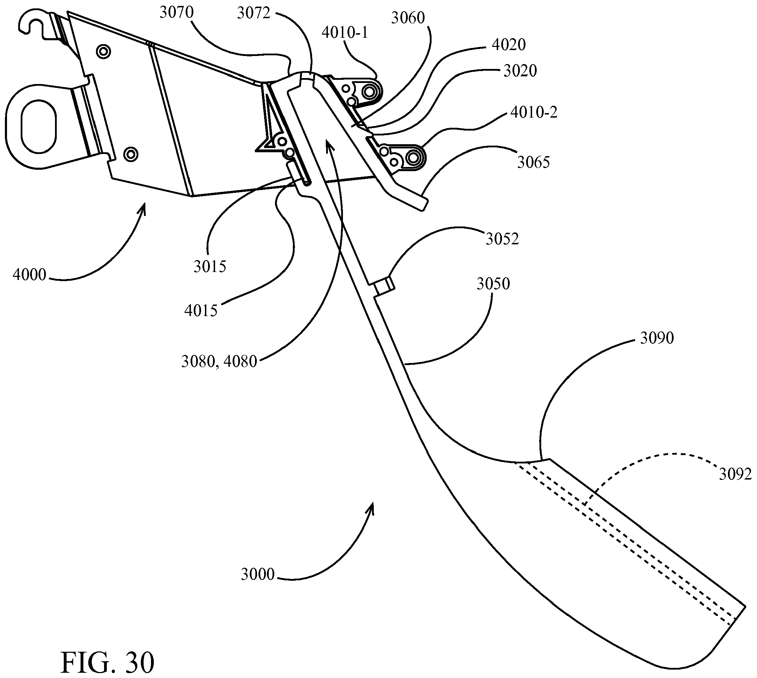

Continuing to refer to FIG. 2, a seed meter 230 such as that disclosed in Applicant's International Patent Application No. PCT/US2012/030192, is preferably disposed to deposit seeds 42 from a hopper 226 into the trench 38, e.g., through a seed tube 232 disposed to guide the seeds toward the trench. In some embodiments, instead of a seed tube 232, a seed conveyor is implemented to convey seeds from the seed meter to the trench at a controlled rate of speed as disclosed in U.S. Patent Application Serial No. 14/347,902 and/or U.S. Patent No. 8,789,482. In such embodiments, a bracket such as that shown in FIG. 30 is preferably configured to mount the seed firmer to the shank via sidewalls extending laterally around the seed conveyor, such that the seed firmer is disposed behind the seed conveyor to firm seeds into the soil after they are deposited by the seed conveyor. In some embodiments, the meter is powered by an electric drive 315 configured to drive a seed disc within the seed meter. In other embodiments, the drive 315 may comprise a hydraulic drive configured to drive the seed disc. A seed sensor 305 (e.g., an optical or electromagnetic seed sensor configured to generate a signal indicating passage of a seed) is preferably mounted to the seed tube 232 and disposed to send light or electromagnetic waves across the path of seeds 42. According to the invention the closing system 236 including one or more closing wheels is pivotally coupled to the row unit 200 and configured to close the trench 38.

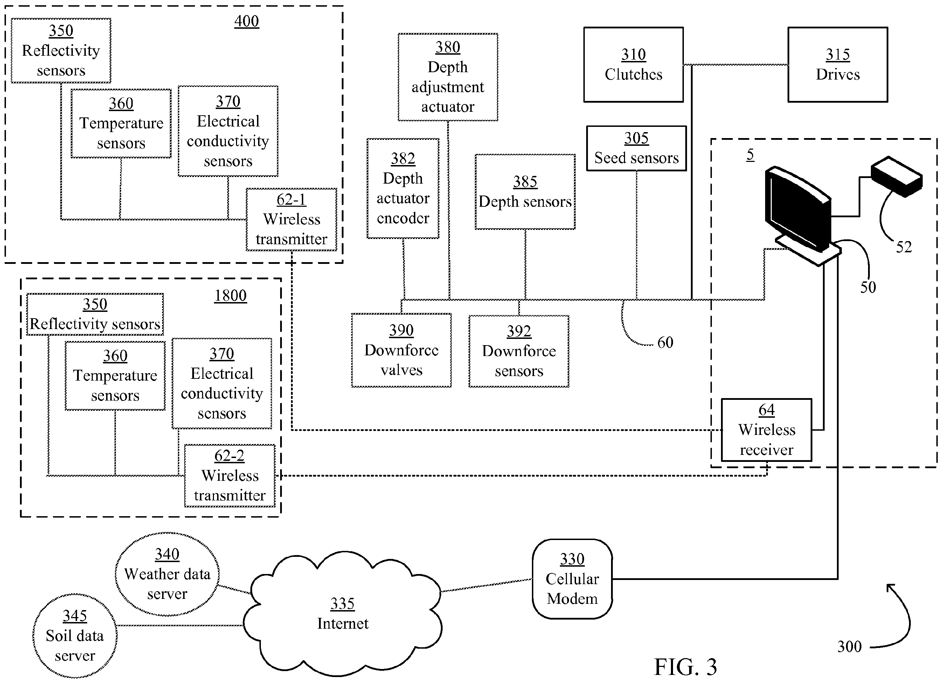

Turning to FIG. 3, a depth control and soil monitoring system 300 is schematically illustrated. The monitor 50 is preferably in data communication with components associated with each row unit 200 including the drives 315, the seed sensors 305, the GPS receiver 52, the downforce sensors 392, the valves 390, the depth adjustment actuator 380, and the depth actuator encoders 382. In some embodiments, particularly those in which each seed meter 230 is not driven by an individual drive 315, the monitor 50 is also preferably in data communication with clutches 310 configured to selectively operably couple the seed meter 230 to the drive 315.

Continuing to refer to FIG. 3, the monitor 50 is preferably in data communication with a cellular modem 330 or other component configured to place the monitor 50 in data communication with the Internet, indicated by reference numeral 335. The internet connection may comprise a wireless connection or a cellular connection. Via the Internet connection, the monitor 50 preferably receives data from a weather data server 340 and a soil data server 345. Via the Internet connection, the monitor 50 preferably transmits measurement data (e.g., measurements described herein) to a recommendation server (which may be the same server as the weather data server 340 and/or the soil data server 345) for storage and receives agronomic recommendations (e.g., planting recommendations such as planting depth, whether to plant, which fields to plant, which seed to plant, or which crop to plant) from a recommendation system stored on the server; in some embodiments, the recommendation system updates the planting recommendations based on the measurement data provided by the monitor 50.

Continuing to refer to FIG. 3, the monitor 50 is also preferably in data communication with one or more temperature sensors 360 mounted to the planter 10 and configured to generate a signal related to the temperature of soil being worked by the planter row units 200. The monitor 50 is preferably in data communication with one or more reflectivity sensors 350 mounted to the planter 10 and configured to generate a signal related to the reflectivity of soil being worked by the planter row units 200.

Referring to FIG. 3, the monitor 50 is preferably in data communication with one or more electrical conductivity sensors 365 mounted to the planter 10 and configured to generate a signal related to the temperature of soil being worked by the planter row units 200.

In some embodiments, a first set of reflectivity sensors 350, temperature sensors 360, and electrical conductivity sensors are mounted to a seed firmer 400 and disposed to measure reflectivity, temperature and electrical conductivity, respectively, of soil in the trench 38. In some embodiments, a second set of reflectivity sensors 350, temperature sensors 360, and electrical conductivity sensors 370 are mounted to a reference sensor assembly 1800 and disposed to measure reflectivity, temperature and electrical conductivity, respectively, of the soil, preferably at a depth different than the sensors on the seed firmer 400.

In some embodiments, a subset of the sensors are in data communication with the monitor 50 via a bus 60 (e.g., a CAN bus). In some embodiments, the sensors mounted to the seed firmer 400 and the reference sensor assembly 1800 are likewise in data communication with the monitor 50 via the bus 60. However, in the embodiment illustrated in FIG. 3, the sensors mounted to the seed firmer the sensors mounted to the seed firmer 400 and the reference sensor assembly 1800 are in data communication with the monitor 50 via a first wireless transmitter 62-1 and a second wireless transmitter 62-2, respectively. The wireless transmitters 62 at each row unit are preferably in data communication with a single wireless receiver 64 which is in turn in data communication with the monitor 50. The wireless receiver may be mounted to the toolbar 14 or in the cab of the tractor 5.

### Soil Monitoring, Seed Monitoring and Seed Firming Apparatus

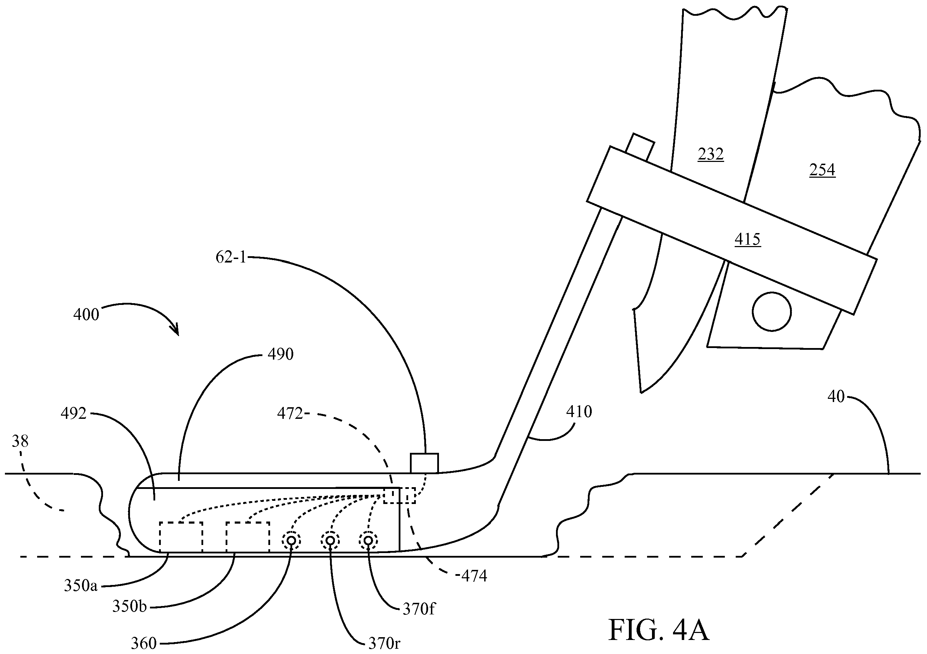

Turning to FIGs. 4A-4C, an embodiment of a seed firmer 400 is illustrated having a plurality of sensors for sensing soil characteristics. The seed firmer 400 preferably includes a flexible portion 410 mounted to the shank 254 and/or the seed tube 232 by a bracket 415. In some embodiments, the bracket 415 is similar to one of the bracket embodiments disclosed in U.S. Patent No 6,918,342. The seed firmer preferably includes a firmer body 490 disposed and configured to be received at least partially within v-shaped trench 38 and firm seeds 42 into the bottom of the trench. When the seed firmer 400 is lowered into the trench 38, the flexible portion 410 preferably urges the firmer body 490 into resilient engagement with the trench. In some embodiments the flexible portion 410 preferably includes an external or internal reinforcement as disclosed in PCT/US2013/066652. In some embodiments the firmer body 490 includes a removable portion 492; the removable portion 492 preferably slides into locking engagement with the remainder of the firmer body. The firmer body 490 (preferably including the portion of the firmer body engaging the soil, which in some embodiments comprises the removable portion 492) is preferably made of a material (or has an outer surface or coating) having hydrophobic and/or anti-stick properties, e.g. having a Teflon graphite coating and/or comprising a polymer having a hydrophobic material (e.g., silicone oil or polyether-ether-ketone) impregnated therein.

Referring to FIG. 30, a modified seed firmer embodiment 3000 is illustrated mounted to a firmer bracket. The firmer bracket is preferably configured to be mounted to the shank of the row unit and support the seed firmer in a position rearward of the seed tube or seed conveyor of the row unit. The seed firmer 3000 preferably includes a firmer body 3090 resiliently biased into the bottom of the trench by a flexible portion 3050. The seed firmer 3000 preferably includes an upper portion 3070 received in an opening 4080 in the bracket 4000. The firmer 3000 preferably includes a hook 3015 which engages a wall 4015 of the bracket; it should be appreciated that the engagement of the wall and hook prevent the firmer from moving upward, forward or rearward relative to the bracket, but permits the firmer to slide downward relative to the bracket. The firmer 3000 preferably includes a flexible mounting portion 3060 having an angled portion 3065 at a lower end thereof and a rearward-facing retention tab 3020. During installation, the user preferably grasps the flexible portion 3050 and inserts the upper portion 3070 in the opening 4080. The firmer is preferably sized such that the flexible mounting portion 3060 deflects toward the flexible portion 3050 as the firmer is inserted into the bracket, until the retention tab 3020 reaches an opening 4020 in a rearward portion of the bracket, allowing the flexible mounting portion 3060 to return to a relaxed (or more relaxed) state in which the retention tab 3020 engages the opening 4020 in order to prevent the firmer 3000 from sliding downward relative to the bracket 4000. In a preferred embodiment, the wall 4015 and the opening 4020 are preferably disposed such that the retention tab 3020 engages the opening 4020 when the firmer reaches the position in which the hook 3015 engages the wall 4015, such that in the installed configuration, the firmer is prevented from moving upward or downward relative to the bracket. During removal of the firmer 3000, the user preferably grasps the flexible portion 3050 and presses the angled portion 3065 (e.g., with the user's thumb) such that the flexible mounting portion 3060 deflects toward the flexible 3050, withdrawing the retention tab 3020 from the opening 4020 and allowing the user to lower the firmer and remove the firmer from the bracket. It should be appreciated that if dust or residue enters the opening 4080 from above the upper portion 3070 of the firmer, such dust or residue falls downward through a gap 3080 between the flexible portions 3050 and the mounting portion 3060 such that dust or residue is not trapped in the bracket or firmer during operation.

Continuing to refer to FIG. 30, a liquid application tube (not shown) may be retained on the firmer 3000 such that a terminal end of the liquid application tube (which may include a flow splitter or other feature) is retained at a rearward end of the firmer, thus being disposed to dispense fluid behind the firmer. One such embodiment is illustrated in FIG. 30, in which the upper portion 3070 includes an opening 3072 sized to receive the liquid application tube, the flexible portion 3050 includes a hock 3052 sized to releasably retain the liquid application tube, and the firmer body 3090 includes an interior channel 3092 sized to receive the liquid application tube.

Continuing to refer to FIG. 30, the firmer 3000 may include any of the firmer-mounted sensors described herein. In some such embodiments, the bracket includes mounting tabs 4010 for supporting a housing (not shown) including electronics or wire pass-throughs for transmitting and processing data generated by the firmer-mounted sensors.

Returning to FIGs. 4A through 4C, the seed firmer 400 preferably includes a plurality of reflectivity sensors 350a, 350b. Each reflectivity sensor 350 is preferably disposed and configured to measure reflectivity of soil; in a preferred embodiment, the reflectivity sensor 350 is disposed to measure soil in the trench 38, and preferably at the bottom of the trench. The reflectivity sensor 350 preferably includes a lens disposed in the bottom of the firmer body 490 and disposed to engage the soil at the bottom of the trench 38. In some embodiments the reflectivity sensor 350 comprises one of the embodiments disclosed in 8,204,689 and/or U.S. Provisional Patent Application 61/824975 ("the '975 application"). In various embodiments, the reflectivity sensor 350 is configured to measure reflectivity in the visible range (e.g., 400 and/or 600 nanometers), in the near-infrared range (e.g., 940 nanometers) and/or elsewhere the infrared range.

The seed firmer 400 preferably includes a temperature sensor 360. The temperature sensor 360 is preferably disposed and configured to measure temperature of soil; in a preferred embodiment, the temperature sensor is disposed to measure soil in the trench 38, preferably at or adjacent the bottom of the trench 38. The temperature sensor 360 preferably includes soil-engaging ears 364, 366 disposed to slidingly engage each side of the trench 38 as the planter traverses the field. The ears 364, 366 preferably engage the trench 38 at or adjacent to the bottom of the trench. The ears 364, 366 are preferably made of a thermally conductive material such as copper. The ears 364 are preferably fixed to and in thermal communication with a central portion 362 housed within the firmer body 490. The central portion 362 preferably comprises a thermally conductive material such as copper; in some embodiments the central portion 362 comprises a hollow copper rod. The central portion 362 is preferably in thermal communication with a thermocouple fixed to the central portion. In other embodiments, the temperature sensor 360 may comprise a non-contact temperature sensor such as an infrared thermometer. In some embodiments, other measurements made by the system 300 (e.g., reflectivity measurements, electrical conductivity measurements, and/or measurements derived from those measurements) are temperature-compensated using the temperature measurement made by the temperature sensor 360. The adjustment of the temperature-compensated measurement based on temperature is preferably carried out by consulting an empirical look-up table relating the temperature-compensated measurement to soil temperature. For example, the reflectivity measurement at a near-infrared wavelength may be increased (or in some examples, reduced) by 1% for every 1 degree Celsius in soil temperature above 10 degrees Celsius.

The seed firmer preferably includes a plurality of electrical conductivity sensors 370r, 370f. Each electrical conductivity sensor 370 is preferably disposed and configured to measure electrical conductivity of soil; in a preferred embodiment, the electrical conductivity sensor is disposed to measure electrical conductivity of soil in the trench 38, preferably at or adjacent the bottom of the trench 38. The electrical conductivity sensor 370 preferably includes soil-engaging ears 374, 376 disposed to slidingly engage each side of the trench 38 as the planter traverses the field. The ears 374, 376 preferably engage the trench 38 at or adjacent to the bottom of the trench. The ears 374, 376 are preferably made of a electrically conductive material such as copper. The ears 374 are preferably fixed to and in electrical communication with a central portion 372 housed within the firmer body 490. The central portion 372 preferably comprises an electrically conductive material such as copper; in some embodiments the central portion 372 comprises a copper rod. The central portion 372 is preferably in electrical communication with an electrical lead fixed to the central portion.

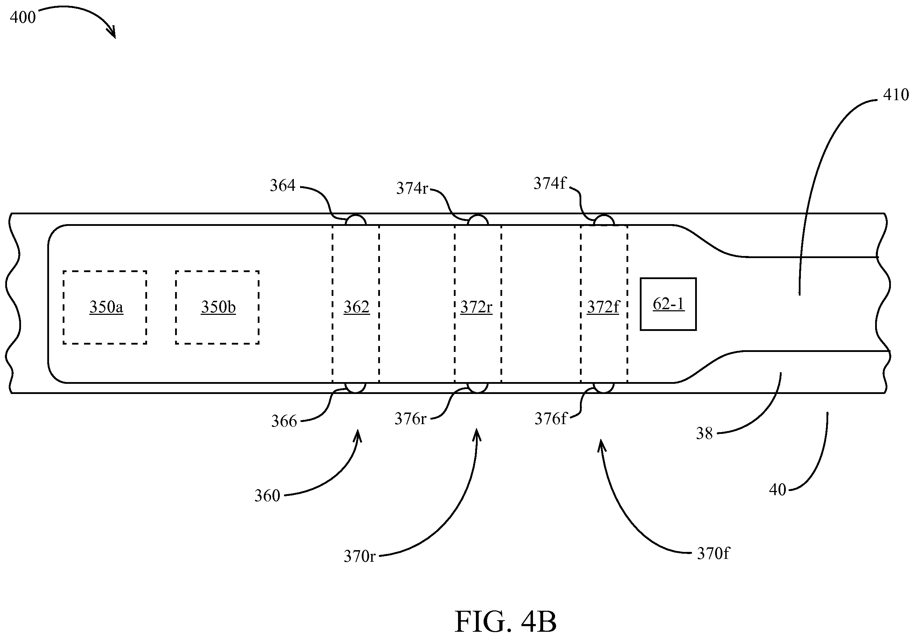

Referring to FIG. 4B, in some embodiments the system 300 measures electrical conductivity of soil adjacent the trench 38 by measuring an electrical potential between the forward electrical conductivity sensor 370f and the rearward electrical conductivity sensor 370f. In other embodiments, the electrical conductivity sensors 370f, 370r may be disposed in longitudinally spaced relation on the bottom of the seed firmer in order to measure electrical conductivity at the bottom of the seed trench.

In other embodiments, the electrical conductivity sensors 370 comprise one or more ground-working or ground-contacting devices (e.g., discs or shanks) that contact the soil and are preferably electrically isolated from one another or from another voltage reference. The voltage potential between the sensors 370 or other voltage reference is preferably measured by the system 300. The voltage potential or another electrical conductivity value derived from the voltage potential is preferably and reported to the operator. The electrical conductivity value may also be associated with the GPS-reported position and used to generate a map of the spatial variation in electrical conductivity throughout the field. In some such embodiments, the electrical conductivity sensors may comprise one or more opening discs of a planter row unit, row cleaner wheels of a planter row unit, ground-contacting shanks of a planter, ground-contacting shoes depending from a planter shank, shanks of a tillage tool, or discs of a tillage tool. In some embodiments a first electrical conductivity sensor may comprise a component (e.g., disc or shank) of a first agricultural row unit while a second electrical conductivity sensor comprises a component (e.g., disc or shank) of a second agricultural row unit, such that electrical conductivity of soil extending transversely between the first and second row units is measured. It should be appreciated that at least one of the electrical conductivity sensors described herein is preferably electrically isolated from the other sensor or voltage reference. In one example, the electrical conductivity sensor is mounted to an implement (e.g., to the planter row unit or tillage tool) by being first mounted to an electrically insulating component (e.g., a component made from an electrically insulating material such as polyethylene, polyvinyl chloride, or a rubber-like polymer) which is in turn mounted to the implement.

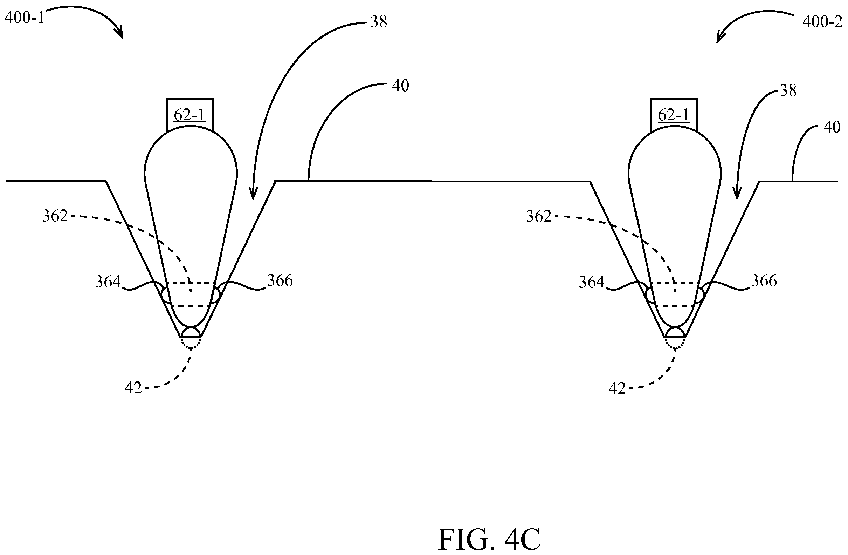

Referring to FIG. 4C, in some embodiments the system 300 measures electrical conductivity of soil between two row units 200 having a first seed firmer 400-1 and a second seed firmer 400-2, respectively, by measuring an electrical potential between an electrical conductivity sensor on the first seed firmer 400-1 and an electrical conductivity sensor on the second seed firmer 400-2. In some such embodiments, the electrical conductivity sensor 370 may comprise a larger ground-engaging electrode (e.g., a seed firmer housing) comprised of metal or other conductive material. It should be appreciated that any of the electrical conductivity sensors described herein may measure conductivity by any of the following combinations: (1) between a first probe on a ground-engaging row unit component (e.g., on a seed firmer, a row cleaner wheel, an opening disc, a shoe, a shank, a frog, a coulter, or a closing wheel) and a second probe on the same ground-engaging row unit component of the same row unit; (2) between a first probe on a first ground-engaging row unit component (e.g., on a seed firmer, a row cleaner wheel, an opening disc, a shoe, a shank, a frog, a coulter, or a closing wheel) and a second probe on a second ground-engaging row unit component (e.g., on a seed firmer, a row cleaner wheel, an opening disc, a shoe, a shank, a frog, a coulter, or a closing wheel) of the same row unit; or (3) between a first probe on a first ground-engaging row unit component (e.g., on a seed firmer, a row cleaner wheel, an opening disc, a shoe, a shank, a frog, a coulter, or a closing wheel) on a first row unit and a second probe on a second ground-engaging row unit component (e.g., on a seed firmer, a row cleaner wheel, an opening disc, a shoe, a shank, a frog, a coulter, or a closing wheel) on a second row unit. Either or both of the row units described in combinations 1 through 3 above may comprise a planting row unit or another row unit (e.g., a tillage row unit or a dedicated measurement row unit) which may be mounted forward or rearward of the toolbar.

The reflectivity sensors 350, the temperature sensors 360, and the electrical conductivity sensors 370 (collectively, the "firmer-mounted sensors") are preferably in data communication with the monitor 50. In some embodiments, the firmer-mounted sensors are in data communication with the monitor 50 via a transceiver (e.g., a CAN transceiver) and the bus 60. In other embodiments, the firmer-mounted sensors are in data communication with the monitor 50 via wireless transmitter 62-1 (preferably mounted to the seed firmer) and wireless receiver 64. In some embodiments, the firmer-mounted sensors are in electrical communication with the wireless transmitter 62-1 (or the transceiver) via a multi-pin connector comprising a male coupler 472 and a female coupler 474. In firmer body embodiments having a removable portion 492, the male coupler 472 is preferably mounted to the removable portion and the female coupler 474 is preferably mounted to the remainder of the firmer body 190; the couplers 472, 474 are preferably disposed such that the couplers engage electrically as the removable portion is slidingly mounted to the firmer body.

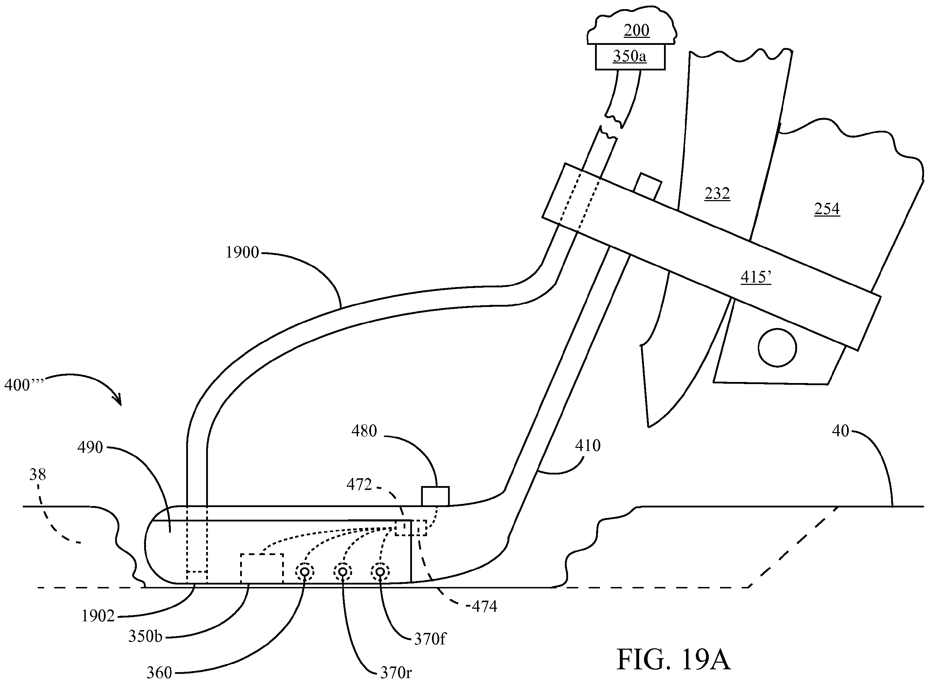

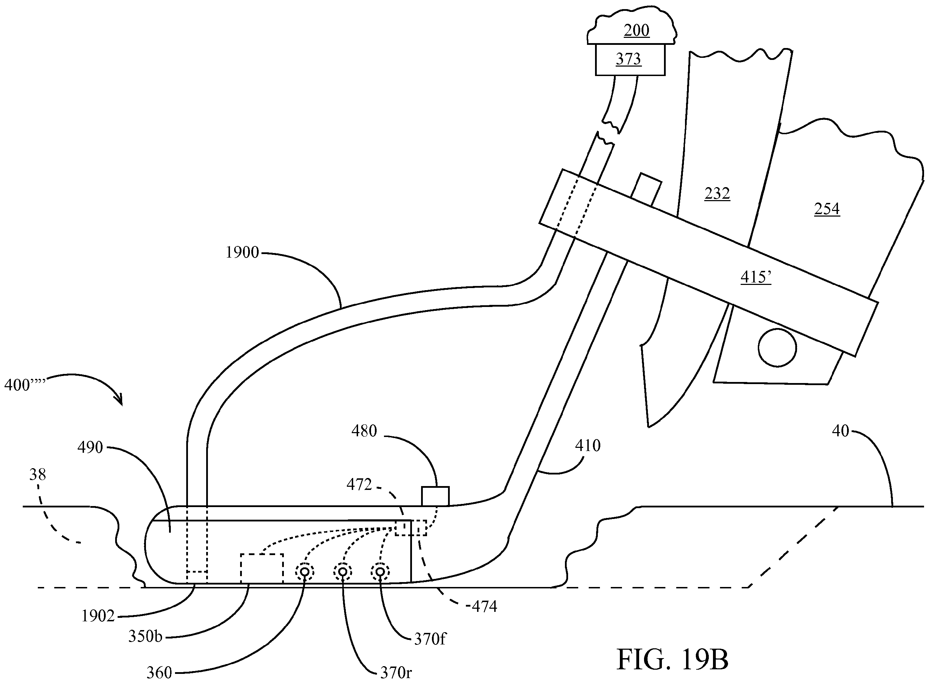

Turning to FIG. 19A, another embodiment of the seed firmer 400'" is illustrated incorporating a fiber-optic cable 1900. The fiber-optic cable 1900 preferably terminates at a lens 1902 in the bottom of the firmer 400"'. The fiber-optic cable 1900 preferably extends to a reflectivity sensor 350a, which is preferably mounted separately from the seed firmer, e.g., elsewhere on the row unit 200. In operation, light reflected from the soil (preferably the bottom of trench 28) travels to the reflectivity sensor 350a via the fiber-optic cable 1900 such that the reflectivity sensor 350a is enabled to measure reflectivity of the soil at a location remote from the seed firmer 400"'. In other embodiments such as the seed firmer embodiment 400"" illustrated in FIG. 19B, the fiber-optic cable extends to a spectrometer 373 configured to analyze light transmitted from the soil. The spectrometer 373 is preferably configured to analyze reflectivity at a spectrum of wavelengths. The spectrometer 373 is preferably in data communication with the monitor 50. The spectrometer 373 preferably comprises a fiber-optic spectrometer such as model no. USB4000 available from Ocean Optics, Inc. in Dunedin, Florida. In the embodiments 400'" and 400"", a modified firmer bracket 415' is preferably configured to secure the fiber-optic cable 1900.

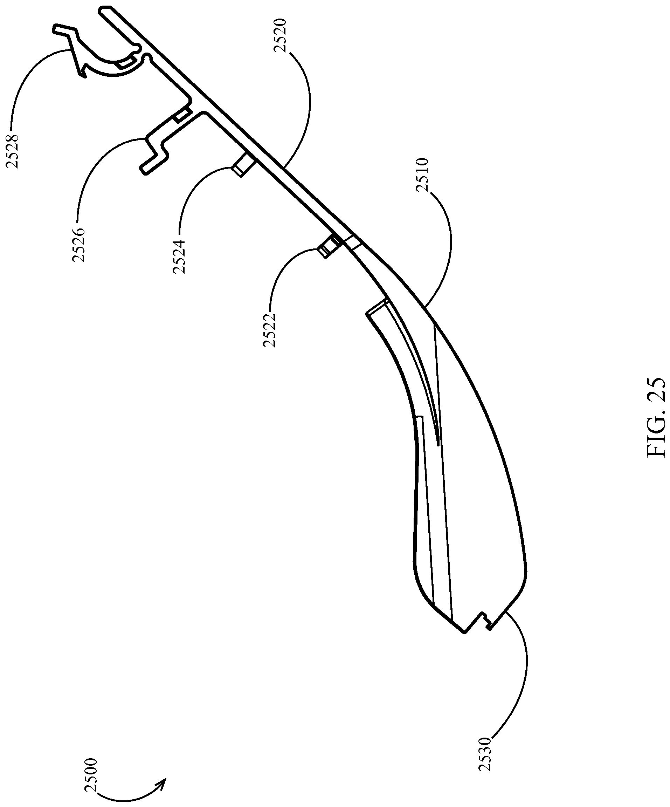

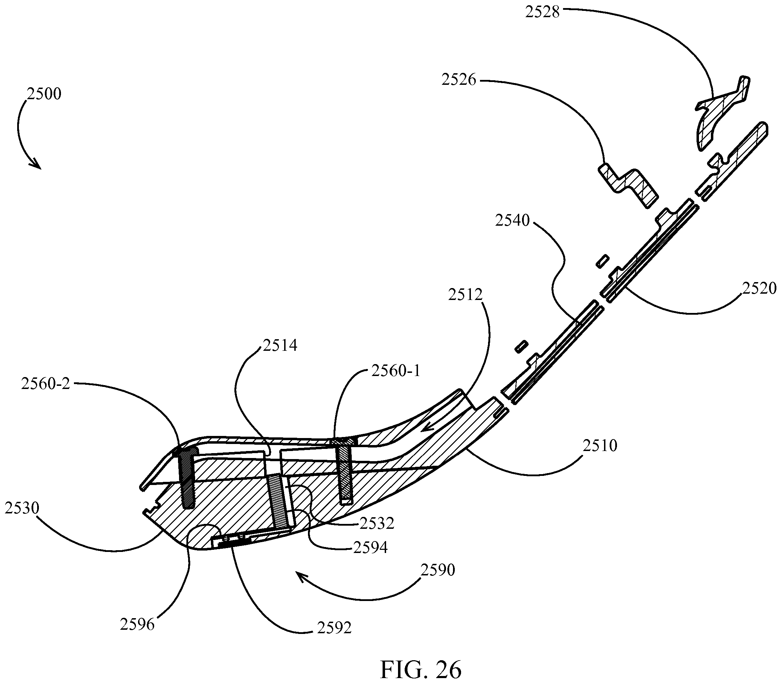

Turning to FIGs. 25-26, another firmer embodiment 2500 is illustrated. The firmer 2500 includes an upper portion 2510 having a mounting portion 2520. The mounting portion 2520 is preferably stiffened by inclusion of a stiffening insert made of stiffer material than the mounting portion (e.g., the mounting portion may be made of plastic and the stiffening insert may be made of metal) in an inner cavity 2540 of the mounting portion 2520. The mounting portion 2520 preferably includes mounting tabs 2526, 2528 for releasably attaching the firmer 2500 to a bracket on the row unit. The mounting portion 2520 preferably includes mounting hooks 2522, 2524 for attaching a liquid application conduit (e.g., flexible tube) (not shown) to the firmer 2500. The upper portion 2510 preferably includes an internal cavity 2512 sized to receive the liquid application conduit. The internal cavity 2512 preferably includes a rearward aperture through which the liquid application conduit extends for dispensing liquid behind the firmer 2500. It should be appreciated that a plurality of liquid conduits may be inserted in the internal cavity 2512; additionally, a nozzle may be included at a terminal end of the conduit or conduits to redirect and/or split the flow of liquid applied in the trench behind the firmer 2500.

The firmer 2500 also preferably includes a ground-engaging portion 2530 mounted to the upper portion 2510. The ground-engaging portion 2530 may be removably mounted to the upper portion 2510; as illustrated, the ground-engaging portion is mounted to the upper portion by threaded screws 2560, but in other embodiments the ground-engaging portion may be installed and removed without the use of tools, e.g. by a slot-and-groove arrangement. The ground-engaging portion 2530 may also be permanently mounted to the upper portion 2510, e.g., by using rivets instead of screws 2560, or by molding the upper portion to the ground-engaging portion. The ground-engaging portion 2530 is preferably made of a material having greater wear-resistance than plastic such as metal (e.g., stainless steel or hardened white iron), may include a wear-resistant coating (or a non-stick coating as described herein), and may include a wear-resistant portion such as a tungsten carbide insert.

The ground-engaging portion 2530 preferably includes a sensor for detecting characteristics of the trench (e.g., soil moisture, soil organic matter, soil temperature, seed presence, seed spacing, percentage of seeds firmed, soil residue presence) such as a reflectivity sensor 2590, preferably housed in a cavity 2532 of the ground-engaging portion. The reflectivity sensor preferably includes a sensor circuit board 2596 having a sensor disposed to receive reflected light from the trench through a transparent window 2592. The transparent window 2592 is preferably mounted flush with a lower surface of the ground-engaging portion such that soil flows underneath the window without building up over the window or along an edge thereof. An electrical connection 2594 preferably connects the sensor circuit board 2596 to a wire or bus (not shown) placing the sensor circuit board in data communication with the monitor 50.

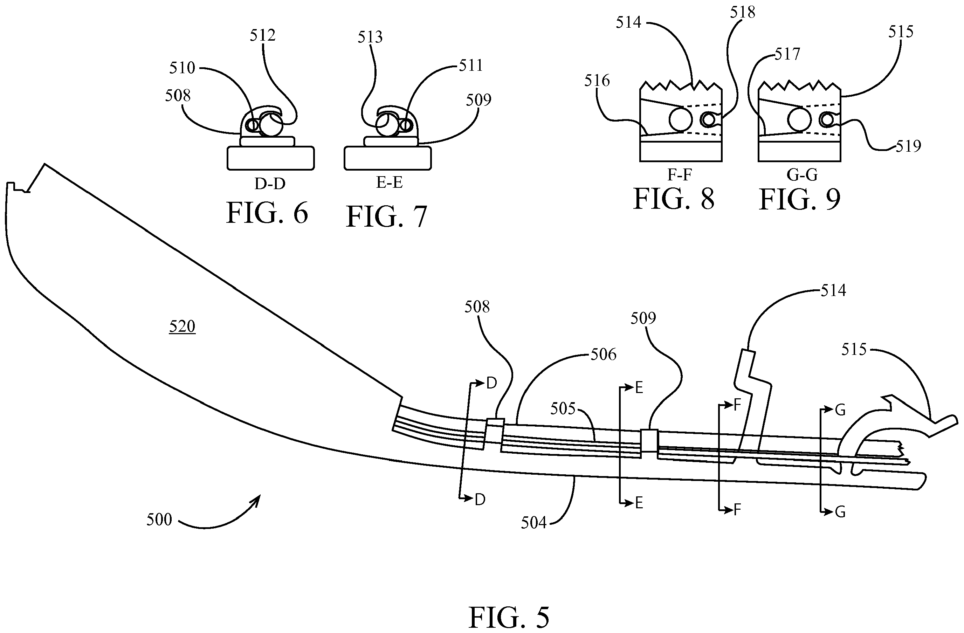

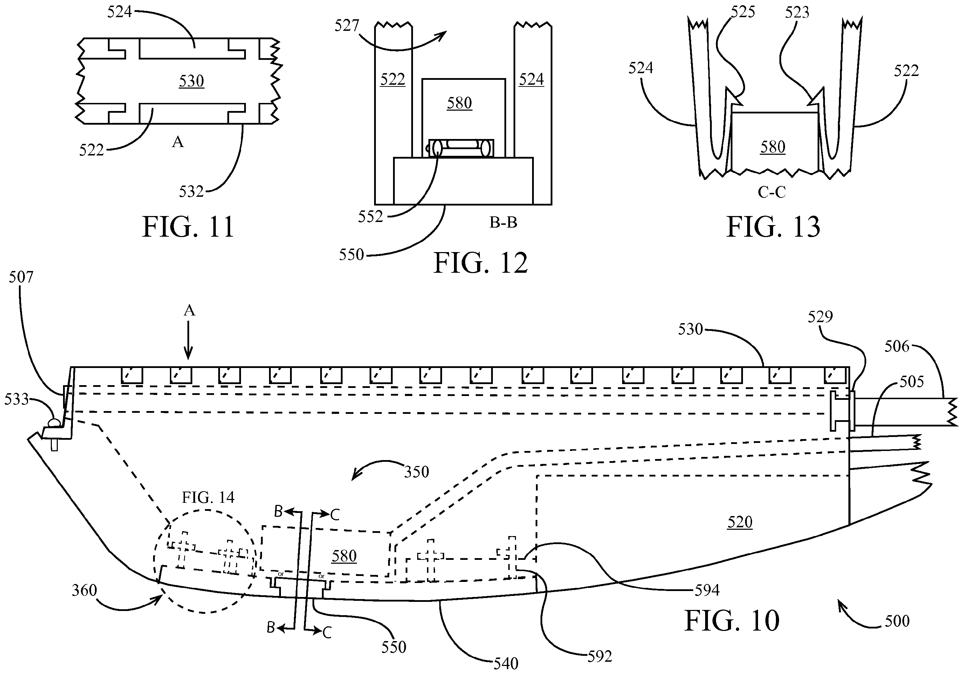

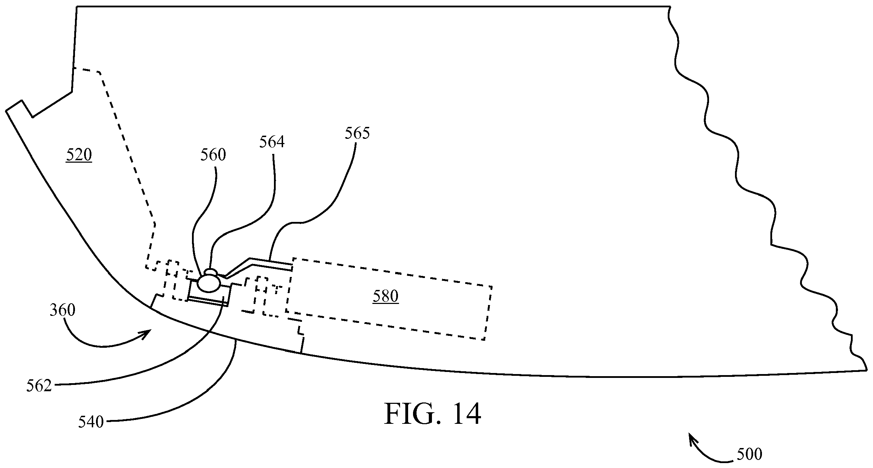

Turning to FIGs. 5-14, another seed firmer embodiment 500 is illustrated. A flexible portion 504 is preferably configured to resiliently press a firmer body 520 into the seed trench 38. Mounting tabs 514, 515 releasably couple the flexible portion 504 to the firmer bracket 415, preferably as described in the '585 application.

A flexible liquid conduit 506 preferably conducts liquid (e.g., liquid fertilizer) from a container to an outlet 507 for depositing in or adjacent to the trench 38. The conduit 506 preferably extends through the firmer body 520 between the outlet 507 and a fitting 529 which preferably constrains the conduit 506 from sliding relative to the firmer body 520. The portion of the conduit may extend through an aperture formed in the firmer body 520 or (as illustrated) through a channel covered by a removable cap 530. The cap 530 preferably engages sidewalls 522, 524 of the firmer body 520 by hooked tabs 532. Hooked tabs 532 preferably retain sidewalls 522, 524 from warping outward in addition to retaining the cap 530 on the firmer body 520. A screw 533 also preferably retains the cap 530 on the firmer body 520.

The conduit 506 is preferably retained to the flexible portion 504 of the seed firmer 500 by mounting hooks 508, 509 and by the mounting tabs 514, 515. The conduit 506 is preferably resiliently grasped by arms 512, 513 of the mounting hooks 508, 509 respectively. The conduit 506 is preferably received in slots 516, 517 of mounting tabs 514, 515, respectively.

A harness 505 preferably comprises a wire or plurality of wires in electrical communication with the firmer-mounted sensors described below. The harness is preferably received in slots 510, 511 of the mounting hooks 508, 509 and additionally retained in place by the conduit 506. The harness 505 is preferably grasped by slots 518, 519 of the mounting tabs 514, 515, respectively; the harness 505 is preferably pressed through a resilient opening of each slot 518, 519 and the resilient opening returns into place so that the slots retain the harness 505 unless the harness is forcibly removed.

In some embodiments the lowermost trench-engaging portion of the seed firmer 500 comprises a plate 540. The plate 540 may comprise a different material and/or a material having different properties from the remainder of the firmer body 520; for example, the plate 540 may have a greater hardness than the remainder of the firmer body 520 and may comprise powder metal. In some embodiments, the entire firmer body 520 is made of a relatively hard material such as powder metal. In an installment phase, the plate 540 is mounted to the remainder of the firmer body 520, e.g., by rods 592 fixed to plate 540 and secured to the remainder of the firmer body by snap rings 594; it should be appreciated that the plate may be either removably mounted or permanently mounted to the remainder of the firmer body.

The seed firmer 500 is preferably configured to removably receive a reflectivity sensor 350 within a cavity 527 within the firmer body 520. In a preferred embodiment, the reflectivity sensor 350 is removably installed in the seed firmer 500 by sliding the reflectivity sensor 350 into the cavity 527 until flexible tabs 525, 523 snap into place, securing the reflectivity sensor 350 in place until the flexible tabs are bent out of the way for removal of the reflectivity sensor. The reflectivity sensor 350 may be configured to perform any of the measurements described above with respect to the reflectivity sensor of seed firmer 400. The reflectivity sensor 350 preferably comprises a circuit board 580 (in some embodiments an over-molded printed circuit board). The reflectivity sensor 350 preferably detects light transmitted through a lens 550 having a lower surface coextensive with the surrounding lower surface of the firmer body 550 such that soil and seeds are not dragged by the lens. In embodiments having a plate 540, the bottom surface of the lens 550 is preferably coextensive with a bottom surface of the plate 540. The lens 550 is preferably a transparent material such as sapphire. The interface between the circuit board 580 and the lens 550 is preferably protected from dust and debris; in the illustrated embodiment the interface is protected by an o-ring 552, while in other embodiments the interface is protected by a potting compound. In a preferred embodiment, the lens 550 is mounted to the circuit board 580 and the lens slides into place within the lowermost surface of the firmer body 520 (and/or the plate 540) when the reflectivity sensor 350 is installed. In such embodiments, the flexible tabs 523, 525 preferably lock the reflectivity sensor into a position wherein the lens 550 is coextensive with the lowermost surface of the firmer body 520.

The seed firmer 500 preferably includes a temperature sensor 360. The temperature sensor 360 preferably comprises a probe 560. The probe 560 preferably comprises a thermo-conductive rod (e.g., a copper rod) extending through the width of the firmer body 500 and having opposing ends extending from the firmer body 500 to contact either side of the trench 38. The temperature sensor 360 preferably also comprises a resistance temperature detector ("RTD") 564 fixed to (e.g., screwed into a threaded hole in) the probe 560; the RTD is preferably in electrical communication with the circuit board 580 via an electrical lead 585; the circuit board 580 is preferably configured to process both reflectivity and temperature measurements and is preferably in electrical communication with the harness 505. In embodiments in which the plate 540 and/or the remainder of the firmer body 520 comprise a thermally conductive material, an insulating material 562 preferably supports the probe 560 such that temperature changes in the probe are minimally affected by contact with the firmer body; in such embodiments the probe 560 is preferably primarily surrounded by air in the interior of the firmer body 520 and the insulating material 562 (or firmer body) preferably contacts a minimal surface area of the probe. In some embodiments the insulating material comprises a low-conductivity plastic such as polystyrene or polypropylene.

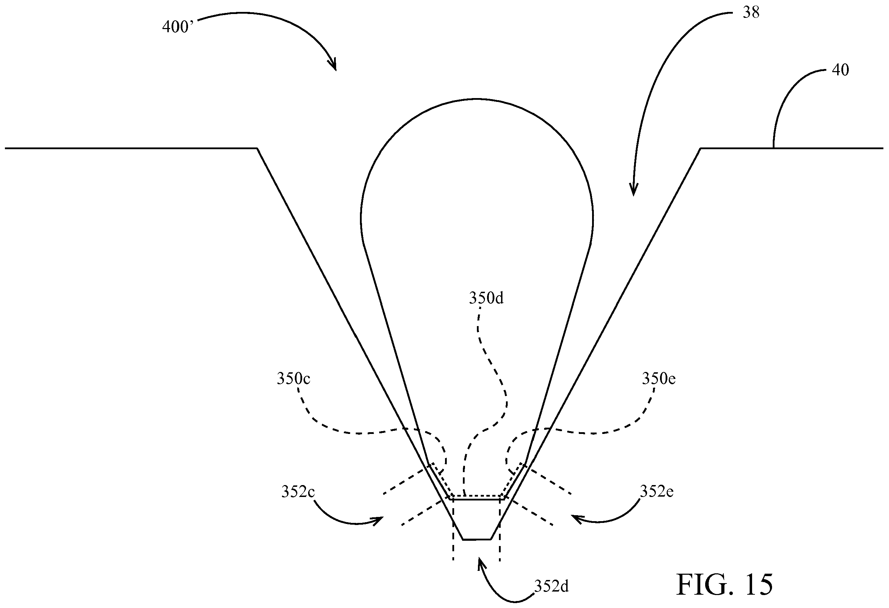

Turning to FIG. 15, another embodiment 400' of the seed firmer is illustrated having a plurality of reflectivity sensors 350. Reflectivity sensors 350c, 350d and 350e are disposed to measure reflectivity of regions 352c, 352d and 352e, respectively, at and adjacent to the bottom of the trench 38. The regions 352c, 352d and 352e preferably constitute a substantially contiguous region preferably including all or substantially the entire portion of the trench in which seed rests after falling into the trench by gravity. In other embodiments, a plurality of temperature and/or electrical conductivity sensors are disposed to measure a larger, preferably substantially contiguous region.

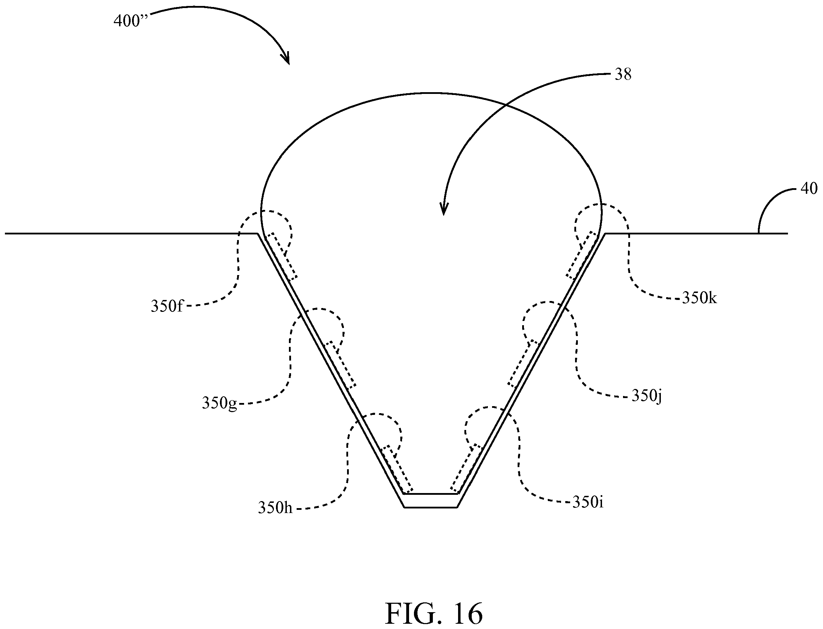

Turning to FIG. 16, another embodiment of a seed firmer 400" is illustrated having a plurality of reflectivity sensors 350 disposed to measure at either side of the trench 38 at various depths within in the trench. The reflectivity sensors 350f, 350k are disposed to measure reflectivity at or adjacent to the top of the trench 38. The reflectivity sensors 350h, 350i are disposed to measure reflectivity at or adjacent to the bottom of the trench 38. The reflectivity sensors 350g, 350j are disposed to measure reflectivity at an intermediate depth of the trench 38, e.g., at half the depth of the trench. It should be appreciated that in order to effectively make soil measurements at a depth at an intermediate depth of the trench, it is desirable to modify the shape of the seed firmer such that the sidewalls of the seed firmer engage the sides of the trench at an intermediate trench depth. Likewise, it should be appreciated that in order to effectively make soil measurements at a depth near the top of the trench (i.e., at or near the soil surface 40), it is desirable to modify the shape of the seed firmer such that the sidewalls of the seed firmer engage the sides of the trench at or near the top of the trench. In other embodiments, a plurality of temperature and/or electrical conductivity sensors are disposed to measure temperature and/or electrical conductivity, respectively, of soil at a plurality of depths within the trench 38.

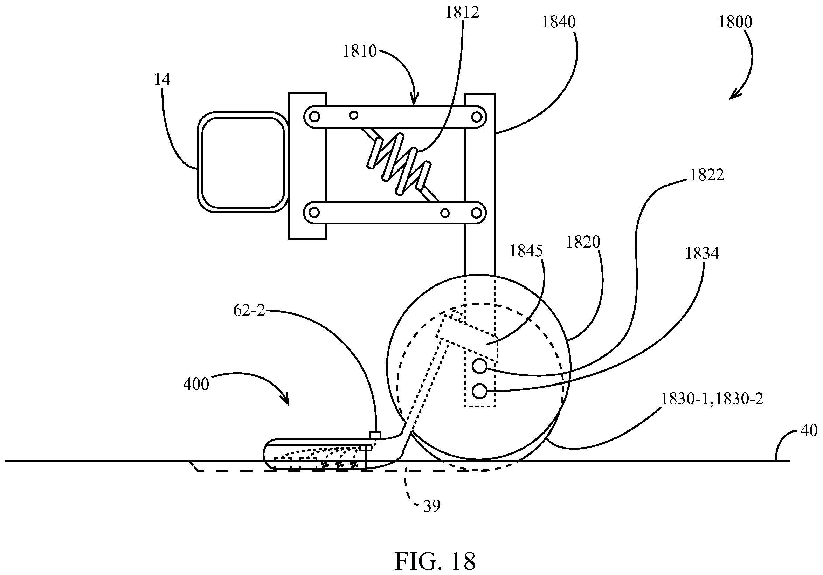

As described above with respect to the system 300, in some embodiments a second set of reflectivity sensors 350, temperature sensors 360, and electrical conductivity sensors 370 are mounted to a reference sensor assembly 1800. One such embodiment is illustrated in FIG. 18, in which the reference sensor assembly opens a trench 39 in which a seed firmer 400 having firmer-mounted sensors is resiliently engaged in order to sense the soil characteristics of the bottom of the trench 39. The trench 39 is preferably at a shallow depth (e.g., between 3.175 and 12.7 mm (1/8 and 1/2 inch)) or at a deep depth (e.g., between 76.2 and 127 mm (3 and 5 inches)). The trench is preferably opened by a pair of opening discs 1830-1, 1830-2 disposed to open a v-shaped trench in the soil 40 and rotating about lower hubs 1834. The depth of the trench is preferably set by one or more gauge wheels 1820 rotating about upper hubs 1822. The upper and lower hubs are preferably fixedly mounted to a shank 1840. The seed firmer is preferably mounted to the shank 1840 by a firmer bracket 1845. The shank 1840 is preferably mounted to the toolbar 14. In some embodiments, the shank 1840 is mounted to the toolbar 14 by a parallel arm arrangement 1810 for vertical movement relative to the toolbar; in some such embodiments, the shank is resiliently biased toward the soil by an adjustable spring 1812 (or other downforce applicator). In the illustrated embodiment the shank 1840 is mounted forward of the toolbar 14; in other embodiments, the shank may be mounted rearward of the toolbar 14. In other embodiments, the firmer 400 may be mounted to the row unit shank 254, to a closing wheel assembly, or to a row cleaner assembly.

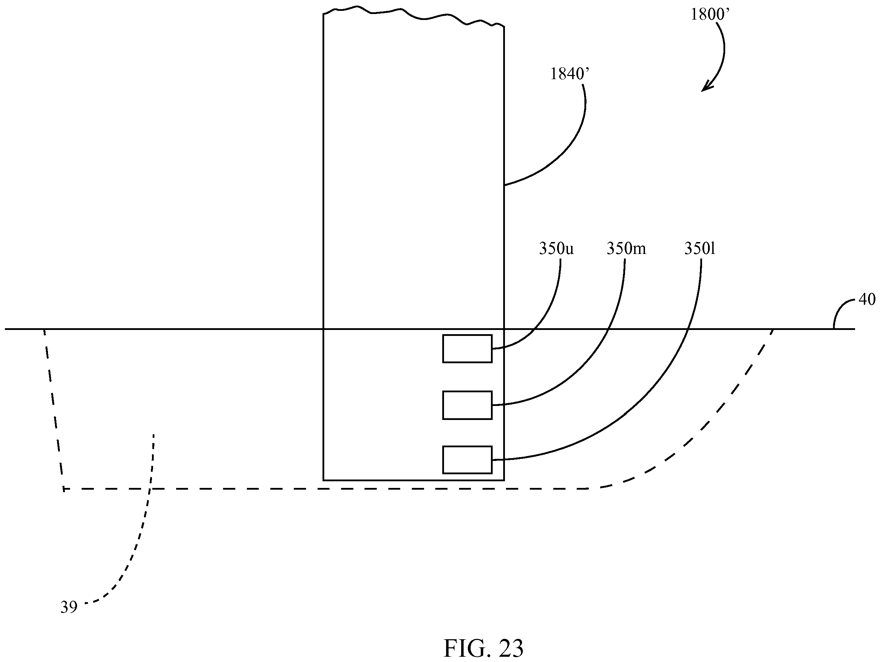

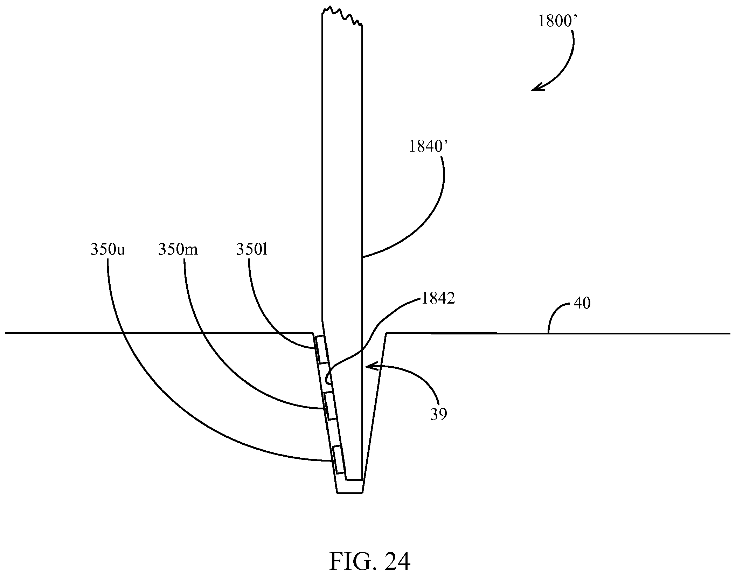

An embodiment of the reference sensor 1800' including an instrumented shank 1840' is illustrated in FIGs. 23 and 24. Reference sensors 350u, 350m, 3501, are preferably disposed on a lower end of the shank 1840 and disposed to contact soil on a sidewall of the trench 39 at or adjacent the top of the trench, at an intermediate trench depth, and at or adjacent the bottom of the trench, respectively. The shank 1840 extends into the trench and preferably includes an angled surface 1842 to which the reference sensors 350 are mounted; the angle of surface 1842 is preferably parallel to the sidewall of the trench 39.

### Data processing and display

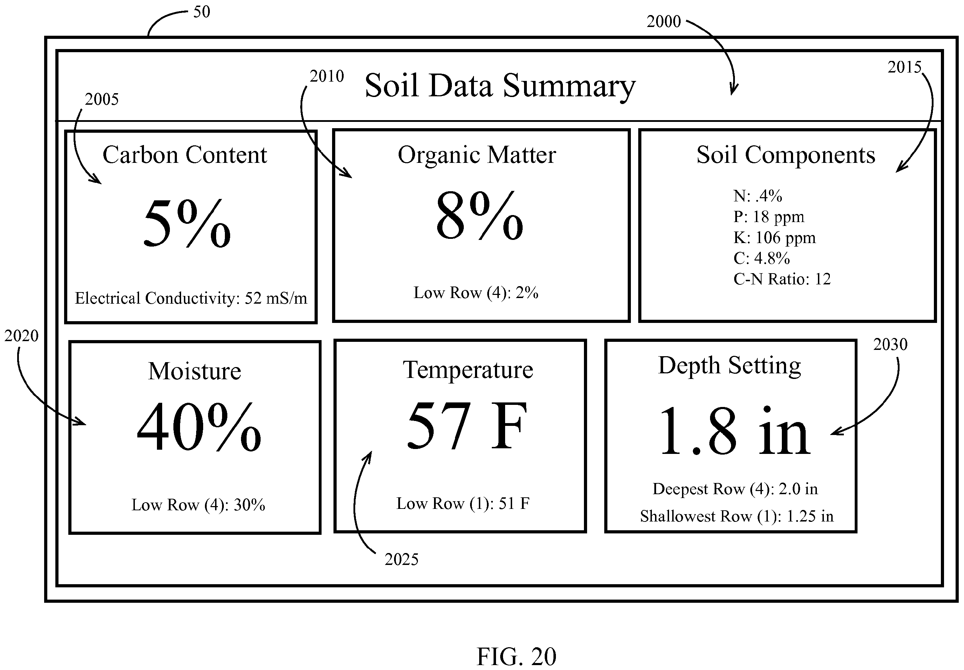

Turning to FIG. 20, the monitor 50 is preferably configured to display a soil data screen 2000 including a plurality of windows displaying soil data. The soil data in each window preferably corresponds to current measurements measured by the firmer-mounted sensors on the seed firmer 400 of the row unit 200 and/or the reference sensor 1800. In some embodiments, the soil data in certain windows may correspond to average measurements over a preceding time window or over a previously traveled distance. In some embodiments the soil data in certain windows corresponds to an average value across a plurality of sensors across the planter; in such embodiments, the window also preferably identifies the row at which the lowest and/or highest value is measured as well as displaying the lowest and/or highest value measured at such row.

A carbon content window 2005 preferably displays an estimate of the soil carbon content. The carbon content is preferably estimated based on the electrical conductivity measured by the electrical conductivity sensors 370, e.g., using an empirical relation or empirical look-up table relating electrical conductivity to an estimated carbon content percentage. The window 2005 preferably additionally displays the electrical conductivity measured by the electrical conductivity sensors 370.

An organic matter window 2010 preferably displays an estimate of the soil organic matter content. The organic matter content is preferably estimated based on the reflectivity at one or a plurality of wavelengths measured by the reflectivity sensors 350, e.g., using an empirical relation or empirical look-up table relating reflectivity at one or a plurality of wavelengths to an estimated organic matter percentage.

A soil components window 2015 preferably displays an estimate of the fractional presence of one or a plurality of soil components, e.g., nitrogen, phosphorous, potassium, and carbon. Each soil component estimate is preferably based on the reflectivity at one or a plurality of wavelengths measured by the reflectivity sensors 350, e.g., using an empirical relation or empirical look-up table relating reflectivity at one or a plurality of wavelengths to an estimated fractional presence of a soil component. In some embodiments, the soil component estimate is preferably determined based on a signal or signals generated by the spectrometer 373. In some embodiments, the window 2015 additionally displays a ratio between the carbon and nitrogen components of the soil.

A moisture window 2020 preferably displays an estimate of soil moisture. The moisture estimate is preferably based on the reflectivity at one or a plurality of wavelengths (e.g., 930 or 940 nanometers) measured by the reflectivity sensors 350, e.g., using an empirical relation or empirical look-up table relating reflectivity at one or a plurality of wavelengths to an estimated moisture. In some embodiments, the moisture measurement is determined as disclosed in the '975 application.

A temperature window 2025 preferably displays an estimate of soil temperature. The temperature estimate is preferably based on the signal generated by one or more temperature sensors 350.

A depth window 2030 preferably displays the current depth setting. The monitor 50 preferably also enables the user to remotely actuate the row unit 200 to a desired trench depth as disclosed in International Patent Application No. PCT/US2014/029352.

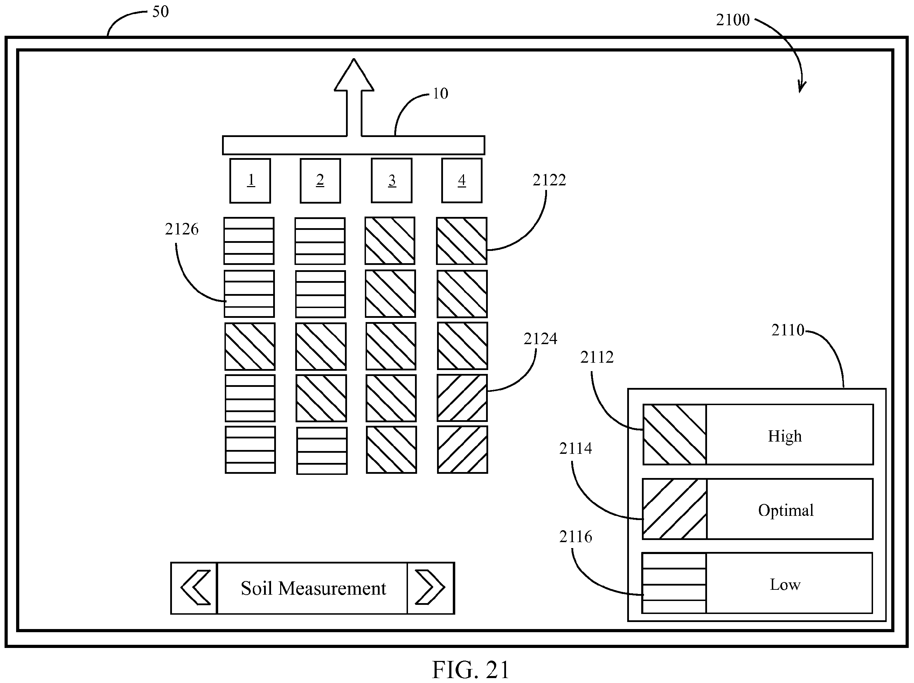

Turning to FIG. 21, the monitor 50 is preferably configured to display one or more map windows 2100 in which a plurality of soil data, measurement, and/or estimate values are represented by blocks 2122, 2124, 2126, each block having a color or pattern associating the measurement at the block position to the ranges 2112, 2114, 2116, respectively (of legend 2110) in which the measurements fall. A map window 2100 is preferably generated and displayed for each soil data, measurement, and/or estimate displayed on the soil data screen 2000, preferably including carbon content, electrical conductivity, organic matter, soil components (including nitrogen, phosphorous, and potassium), moisture and soil temperature.

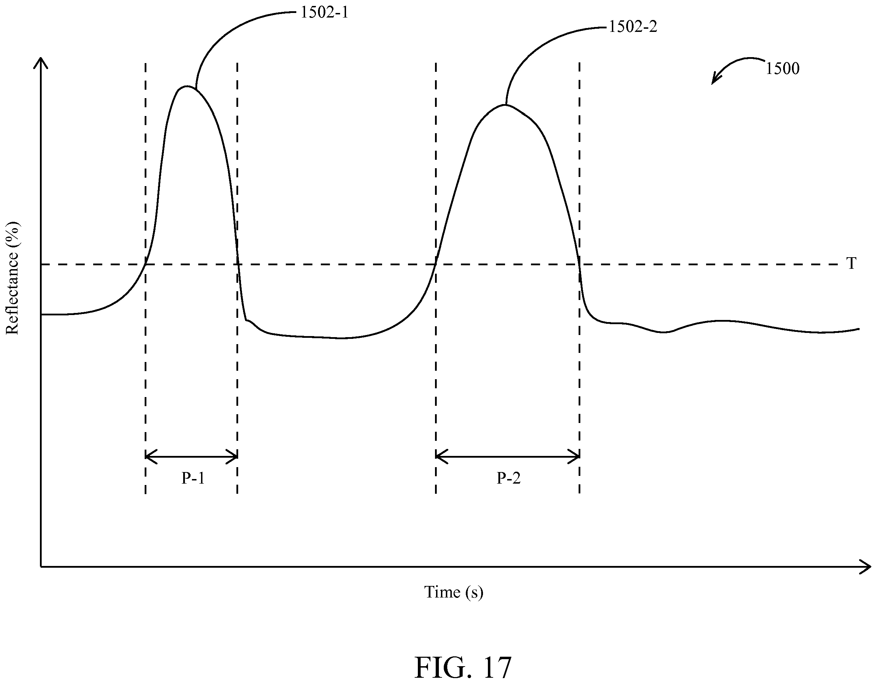

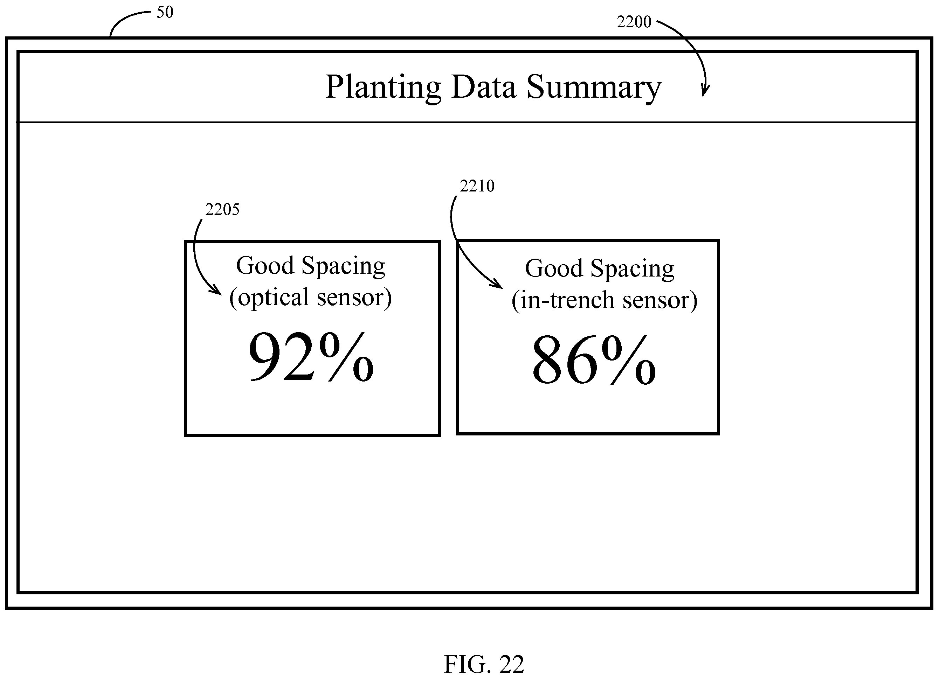

Turning to FIG. 22, the monitor 50 is preferably configured to display one or more planting data windows including planting data measured by the seed sensors 305 and/or the reflectivity sensors 350. The window 2205 preferably displays a good spacing value calculated based on seed pulses from the optical (or electromagnetic) seed sensors 305. The window 2210 preferably displays a good spacing value based on seed pulses from the reflectivity sensors 350. Referring to FIG. 17, seed pulses 1502 in a reflectivity signal 1500 may be identified by a reflectance level exceeding a threshold T associated with passage of a seed beneath the seed firmer. A time of each seed pulse 1502 may be established to be the midpoint of each period P between the first and second crossings of the threshold T. Once times of seed pulses are identified (whether from the seed sensor 305 or from the reflectivity sensor 350), the seed pulse times are preferably used to calculate a good spacing value as disclosed in U.S. Patent Application No. 13/752,031 ("the '031 application"). In some embodiments, in addition to good spacing other seed planting information (including, e.g., population, singulation, skips and multiples) is also calculated and displayed on the screen 2200 according to the methods disclosed in the '031 application. In some embodiments, the same wavelength (and/or the same reflectivity sensor 350) is used for seed detection as moisture and other soil data measurements; in some embodiments the wavelength is about 940 nanometers. Where the reflectivity signal 1500 is used for both seed detection and soil measurement (e.g., moisture), the portion of the signal identified as a seed pulse (e.g., the periods P) are preferably not used in calculating the soil measurement; for example, the signal during each period P may be assumed to be a line between the times immediately prior to and immediately following the period P, or in other embodiments it may be assumed to be the average value of the signal during the previous 30 seconds of signal not falling within any seed pulse period P. In some embodiments, the screen 2200 also displays a percentage or absolute difference between the good spacing values or other seed planting information determined based on seed sensor pulses and the same information determined based on reflectivity sensor pulses.

In some embodiments, seed sensing is improved by selectively measuring reflectivity at a wavelength or wavelengths associated with a characteristic or characteristics of the seed being planted. In some such embodiments, the system 300 prompts the operator to select a crop, seed type, seed hybrid, seed treatment and/or another characteristic of the seed to be planted. The wavelength or wavelengths at which reflectivity is measured to identify seed pulses is preferably selected based on the seed characteristic or characteristics selected by the operator.

In some embodiments, the "good spacing" values are calculated based on both the seed pulse signals generated by the optical or electromagnetic seed sensors 305 and the reflectivity sensors 350.

In some such embodiments, the "good spacing" value for a row unit is based on the seed pulses generated the reflectivity sensor 350 associated with the row unit, which are filtered based on the signal generated by the optical seed sensor 305 on the same row unit. For example, a confidence value may be associated each seed pulse generated by the optical seed sensor, e.g., directly related to the amplitude of the optical seed sensor seed pulse; that confidence value may then be modified based on the optical seed sensor signal, e.g., increased if a seed pulse was observed at the optical seed sensor within a threshold period prior to the reflectivity sensor seed pulse, and decreased if the a seed pulse was not observed at the optical seed sensor within a threshold period prior to the reflectivity sensor seed pulse. A seed pulse is then recognized and stored as a seed placement if the modified confidence value exceeds a threshold.

In other such embodiments, the "good spacing" value for a row unit is based on the seed pulses generated the optical seed sensor 305 associated with the row unit, which are modified based on the signal generated by the reflectivity sensor 350 on the same row unit. For example, the seed pulses generated by the optical seed sensor 305 may be associated with the time of the next seed pulse generated by the reflectivity sensor 350. If no seed pulse is generated by the reflectivity sensor 350 within a threshold time after the seed pulse generated by the seed sensor 305, then the seed pulse generated by the seed sensor 305 may be either ignored (e.g., if a confidence value associated with the seed sensor seed pulse is below a threshold) or adjusted by an average time delay between reflectivity sensor seed pulses and seed sensor seed pulses (e.g., the average time delay for the last 10, 100 or 300 seeds).

In addition to displaying seed planting information such as good spacing values, in some embodiments the seed pulses measured may be used to time deposition of in-trench liquid and other crop inputs in order to time application such that the applied crop input lands on the seed, adjacent to the seed, or between seeds as desired. In some such embodiments, a liquid applicator valve selectively permitting liquid to flow from outlet 507 of the liquid conduit 506 is briefly opened a threshold time (e.g., 0 seconds, 1 ms, 10 ms, 100 ms or 1 second) after a seed pulse 1502 is identified in signal 1500 from the reflectivity sensor 350 associated with the same row unit 200 as the liquid applicator valve.

A signal generated by the reflectivity sensor may also be used to identify the presence of crop residue (e.g., corn stalks) in the seed trench. Where reflectivity in a range of wavelengths associated with crop residue (e.g., between 560 and 580 nm) exceeds a threshold, the system 300 preferably determines that crop residue is present in the trench at the current GPS-reported location. The spatial variation in residue may then be mapped and displayed to a user. Additionally, the downpressure supplied to a row cleaner assembly (e.g., a pressure-controlled row cleaner as disclosed in U.S. Patent No 8,550,020) may be adjusted either automatically by the system 300 in response to the identification of residue or adjusted by the user. In one example, the system may command a valve associated with a row cleaner downpressure actuator to increase by 5 psi in response to an indication that crop residue is present in the seed trench. Similarly, a closing wheel downforce actuator may also be adjusted by the system 300 or the operator in response to an indication that crop residue is present in the seed trench.

In some embodiments, an orientation of each seed is determined based on the width of reflectivity-based seed pulse periods P. In some such embodiments, pulses having a period longer than a threshold (an absolute threshold or a threshold percentage in excess of the mean pulse period) are categorized in a first category while pulses having a shorter period than the threshold are categorized in a second category. The first and second category preferably correspond to first and second seed orientations. Percentages of seeds over the previous 30 seconds falling in the first and/or second category may be displayed on the screen 2200. The orientation of each seed is preferably mapped spatially using the GPS coordinates of the seed such that individual plant performance may be compared to seed orientation during scouting operations.

In some embodiments, a determination of seed-to-soil contact is made based on the existence or lack of a recognized seed pulse generated by the reflectivity sensor 350. For example, where a seed pulse is generated by the optical seed sensor 305 and no seed pulse is generated by the reflectivity sensor 350 within a threshold time after the optical seed sensor seed pulse, a "Poor" seed-to-soil contact value is preferably stored and associated with the location at which the reflectivity sensor seed pulse was expected. An index of seed-to-soil contact may be generated for a row or rows by comparing the number of seeds having "Poor" seed-to-soil contact over a threshold number of seeds planted, distance traveled, or time elapsed. The operator may then be alerted via the monitor 50 as to the row or rows exhibiting seed-to-soil contact below a threshold value of the index. Additionally, the spatial variation in seed-to-soil contact may be mapped and displayed to the user. Additionally, a criterion representing the percentage of seeds firmed (e.g., not having "Poor" seed-to-soil contact) over a preceding time period or number of seeds may be displayed to the operator.

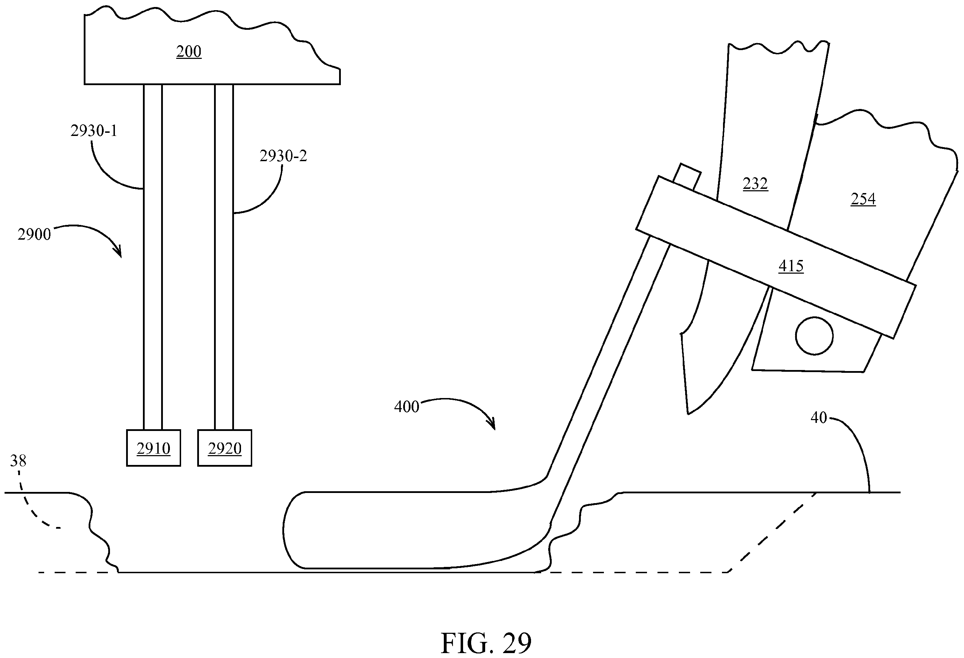

Turning to FIG. 29, in some embodiments, the row unit 200 additionally comprises a trench condition sensing system 2900. The trench condition sensing system 2900 preferably includes a sensor 2910 disposed to measure a characteristic (e.g., reflectivity, moisture, temperature, presence of seeds, presence of residue) of the trench 38 (e.g., the bottom of the trench). The sensor 2910 preferably comprises a sensor configured to remotely measure the trench characteristic, e.g., without contacting the soil. The sensor 2910 is preferably disposed above the soil surface (e.g., above the bottom of the trench and preferably above the top of the trench). The sensor 2910 may comprise a reflectivity sensor. The trench condition sensing system 2900 preferably additionally comprises light source 2920 (e.g., an LED) disposed to illuminate the trench 28. In some embodiments, the light source 2920 is configured to modify the intensity and/or wavelength at which the trench is illuminated. The sensor 2910 and the light source 2920 are preferably disposed longitudinally behind the seed firmer 400 and longitudinally forward of the closing system 236. The sensor 2910 and the light source 2920 are preferably disposed transversely between the lateral edges of the trench 38. The sensor 2910 and the light source 2920 are preferably suspended in their preferred locations by supports 2930 depending from the frame of the row unit 200. The sensor 2910 and the light source 2920 are preferably in data communication with the planter monitor 50 for transmission of commands and measurement data.

### Lateral extrusion embodiments

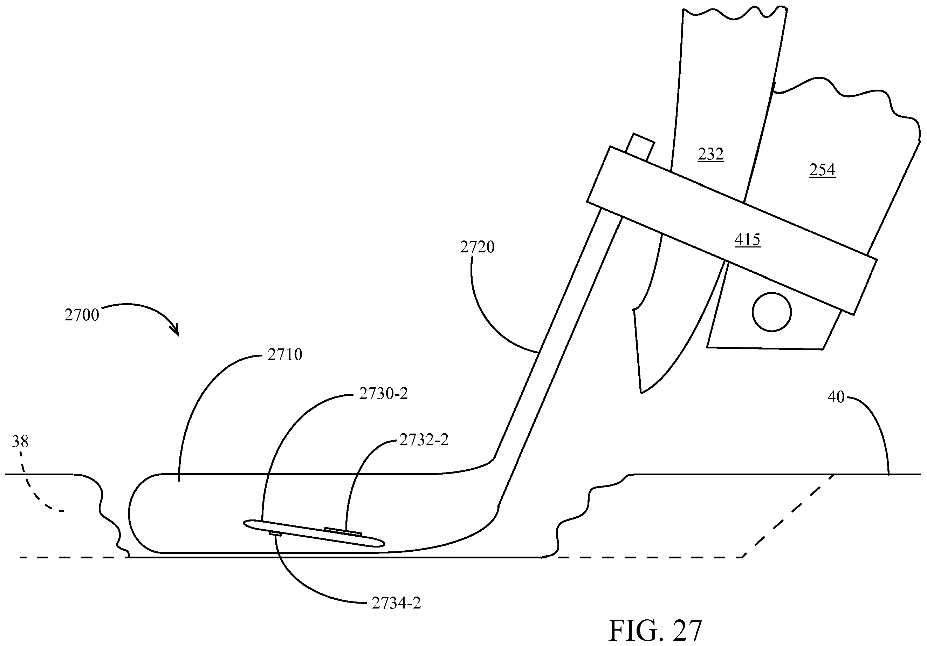

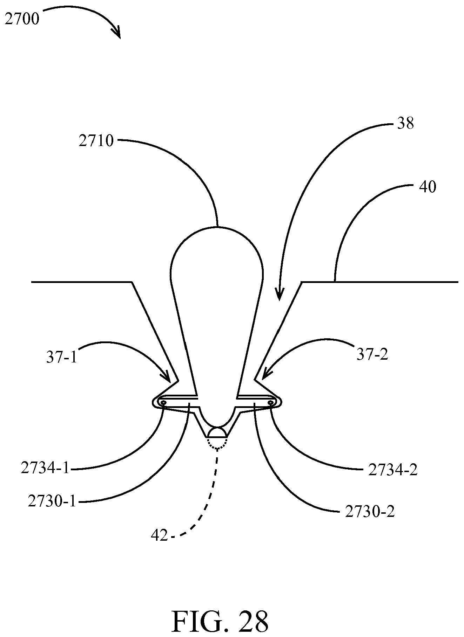

Turning to FIGs. 27 and 28, a seed firmer embodiment having lateral trench-engaging extrusions ("wings") 2730 is illustrated. The wings 2730-1, 2730-2 are preferably disposed on the left and right side, respectively of the seed firmer 2700. The wings 2730 may be mounted (e.g., by a tongue-and-groove arrangement) to the firmer body 2710 of the seed firmer 2700 or formed as a single unitary part with the firmer body. The wings 2730 are preferably disposed to open transversely-extending side trenches 37 in the soil as the firmer is moved longitudinally through the primary trench 38, such that the primary trench 38 includes two transversely-extending side trenches on its left and right sides. Each wing is preferably disposed at a wing angle (e.g., 10 degrees to 30 degrees) relative to horizontal such that a rearward end of the wing is higher than the a forward end of the wing. Each wing preferably has an upper surface which is preferably disposed at the wing angle. The wings 2730 are preferably disposed to retain a bottom surface of the firmer body 2710 in contact with the bottom of the primary trench 38, e.g., by transmitting a downward vertical force from the soil to the firmer body. The downward vertical force may be developed by the cutting action of the wing 2730; e.g., the downward vertical force may be developed by soil moving from the lower forward end of the wing to the higher rearward end of the wing.

The wings 2730 may be made of the same material or a different material from the firmer body 2710. The wings 2730 may be made of a plastic or made of a material having greater wear-resistance than plastic such as metal (e.g., stainless steel or hardened white iron), may include a wear-resistant coating (or a non-stick coating as described herein), and may include a wear-resistant portion such as a tungsten carbide insert.

Each wing 2730 preferably includes a sensor 2732. In some embodiments, the sensor is disposed on an upper surface of the wing 2730 as illustrated. In other embodiments, the sensor may be disposed on a forward end or a lower surface of the wing. The sensor 2732 may be an electrical conductivity sensor (e.g., one or more electrical conductivity probes), a temperature sensor (e.g., one or more thermocouple probes), a moisture sensor (e.g., a reflectivity sensor), an organic matter sensor (e.g., a reflectivity sensor), a pH sensor (e.g., a reflectivity sensor), a residue sensor (e.g., a reflectivity sensor), or a seed sensor (e.g., a reflectivity sensor).

Each wing 2730 preferably includes a fluid outlet 2734. The fluid outlet 2734 is preferably in fluid communication with a source of fluid (e.g., a fertilizer comprising pop-up starter, a fertilizer comprising nitrogen, a pesticide, or an herbicide). The fluid outlet 2734 may be in fluid communication with the source of fluid via an internal channel formed in the wings and/or the firmer body, where the internal channel is in fluid communication with a liquid supply tube placing the seed firmer 2700 in fluid communication with the source of fluid. The source of fluid may be mounted on the row unit, on the toolbar, elsewhere on the planter, on a separately drawn cart, or on the tractor. In the illustrated embodiment, the fluid outlet 2734 is formed in a transversely distal end of the wing 2730. In other embodiments, the fluid outlet 2734 may be formed in a transversely medial portion of the wing 2730 or adjacent to the firmer body 2710. In the illustrated embodiment, the fluid outlet 2734 is formed in a lower surface of the wing 2730 and disposed to dispense fluid in a generally downward direction (e.g., normal to the lower surface of the wing). In other embodiments, the fluid outlet 2734 may be formed in the outer distal tip of the wing 2730 and disposed to dispense fluid in an outboard direction. In other embodiments, the fluid outlet 2734 may be formed in an upper surface of the wing 2730 and disposed to dispense fluid in a generally upward direction (e.g., normal to the upper surface of the wing). The fluid outlet 2734 is laterally spaced from the transverse center of the firmer body 2710 by a distance selected to avoid "burning" seed placed in the bottom of the trench with the liquid applied through the fluid outlet. For example, the fluid outlet 2734 may be laterally spaced from the transverse center of the firmer body 2710 by a distance between 12.7 mm and 76.2 mm, e. g., 25.4 mm, 38.1 mm, 63.5 mm (0.5 inches and 3 inches, e.g., 1 inch, 1.5 inches, or 2.5 inches).

It should be appreciated that the firmer embodiment 2700 may additionally comprise the other sensors described herein, e.g., those disposed on the bottom of the firmer body 2710).

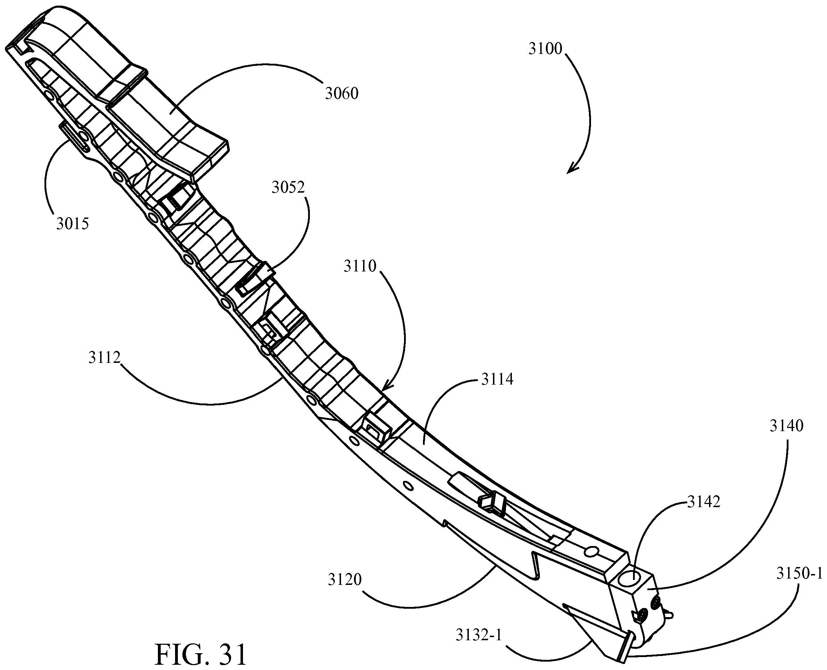

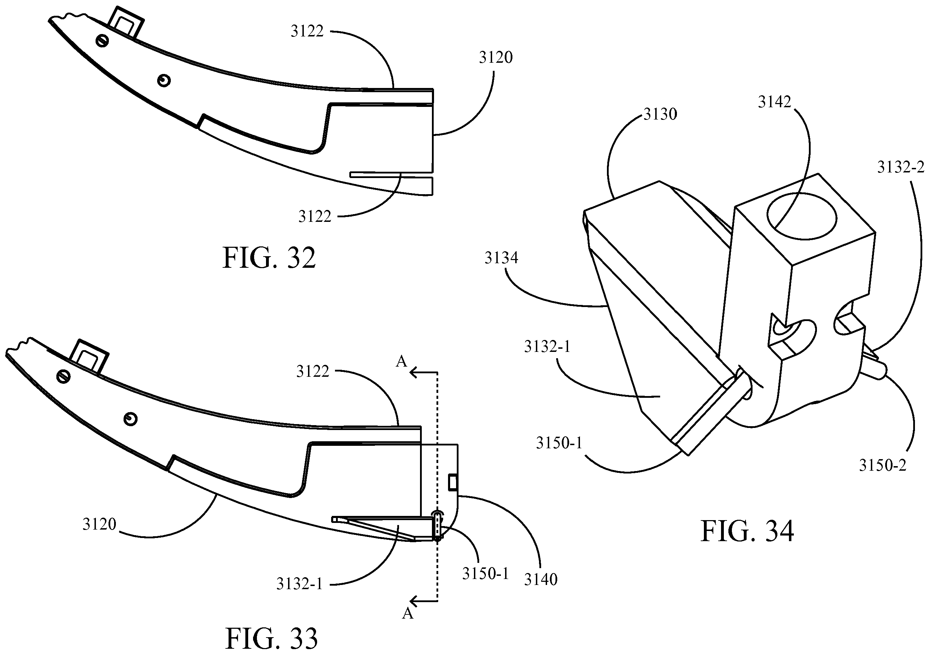

Turning to FIGs. 31-36, a firmer 3100 is illustrated having wings 3132 configured to create an opening in the sidewall of the planting trench and injection needles 3150 for injecting liquid (e.g., fertilizer such as nitrogen) into the opening.

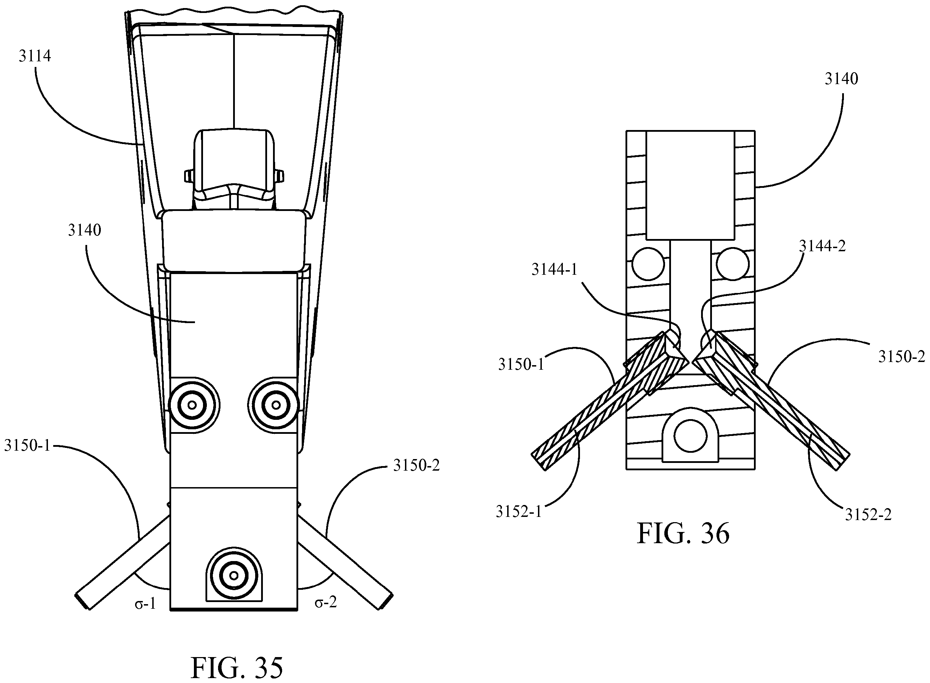

According to the invention the firmer body 3110 includes a flexible portion 3112 for maintaining a resilient downward force on a tail portion 3114 of the firmer body as the firmer 3100 traverses the soil. A ground-engaging portion 3120 is mounted to the tail portion 3114 and is disposed to engage the trench and firm seeds at the bottom of the trench into the soil. Left and right wings 3132-1, 3132-2 and the injection needles 3150 preferably extend from the firmer 3100 at a downward angle, e.g., an angle σ from vertical as illustrated in FIG. 35. The angle σ maybe between 10 and 80 degrees, e.g., 45 degrees. A forward-facing edge 3134 of each wing 3132 preferably cuts into the soil; the edge 3134 is preferably in a swept-back orientation, that is, angled backward relative to a horizontal lateral (i.e., normal to the implement travel direction) plane at an angle between 10 and 80 degrees (e.g., 30 degrees, 45 degrees, or 70 degrees).

The manifold 3140 is preferably configured to receive liquid and distribute to the trench, e.g., to the openings created by the wings 3132. As illustrated in FIG. 36, in the illustrated embodiment liquid is preferably introduced to an inlet 3142 in the manifold 3140 by a flexible tube (not shown). The inlet 3142 is preferably in fluid communication with interior conduits 3152 of each injection needle 3150 via outlets 3144.

In installation, a wing body 3130 is preferably inserted into a slot 3122 in the ground-engaging portion 3120. The wing body 3130 is preferably retained in the slot 3122 by mounting a manifold 3140 to a terminal end of the ground-engaging portion 3120. It should be appreciated that the wing body 3130 may be removed and replaced by removing the manifold 3140 (e.g., by removing the bolts illustrated in FIG. 35). The injection needles 3150 may be removably inserted into the manifold 3140 (e.g., by threading) or permanently installed in the manifold (e.g., by welding, brazing or adhesive).

In operation, the wings 3132 preferably open side trenches 37 in the sidewalls of the trench 38 and liquid is pumped from a liquid source through the injection needles 3150 into the side trenches. It should be appreciated that the position of the injection needles 3150 directly behind the wings 3132 permits the injection needles to ride through the side trenches opened by the wings as the implement traverses the field.

In some embodiments, not being according to the present invention the wings 3132 may be supplemented or replaced with other firmer-mounted structure configured to open the side trenches 37. In some examples, a moving cutting surface such as a rotating circular blade may be provided on the side of the seed firmer to open the side trenches 37. In some embodiments, not being according to the present invention the wings may be omitted. In some such embodiments, the injection needles may be omitted and liquid applied through an opening flush with or raised slightly from the surface of the seed firmer; in some such embodiments, the opening may be relatively small and the applied liquid pressure increased in order to insert liquid into the sidewalls of trench 38 by spraying pressurized liquid into the sidewalls rather than or in addition to opening side trenches 37.

In some embodiments, not being according to the present invention the injection needles and wings (or similar structure for opening side trenches and injecting liquid) may be provided on structure other than a seed firmer disposed to open and fertilize side trenches in the planting trench 38 or another trench. In some examples, the injection needles and wings may be mounted to shank extending into the trench (e.g., to a modified embodiment of the shank 254), to the closing wheel assembly, or to an additional bracket or mounting structure depending from the row unit.

It should be appreciated that the various components of the firmer embodiment 3100 may have varying material properties. The flexible portion 3112 tail portion 3114 may be made of a nylon or acetal (e.g., Delrin). The ground-engaging portion 3120 may be made of metal such as steel or cobalt. The ground-engaging portion 3120 may be provided with a wear-resistant layer such as tungsten carbide. The ground-engaging portion 3120 may be provided with a non-stick coating such as Teflon. The wings 3132 may be made of a metal such as steel or stainless steel. The edge 3134 of each wing and/or the entire wing 3132 may be provided with a wear-resistant layer such as tungsten carbide. The injection needles 3150 may be made of a metal such as steel or stainless steel. The manifold 140 may be made of an acetal (e.g., Delrin), a nylon, a plastic, or a metal (e.g., aluminum, steel, or powdered metal).

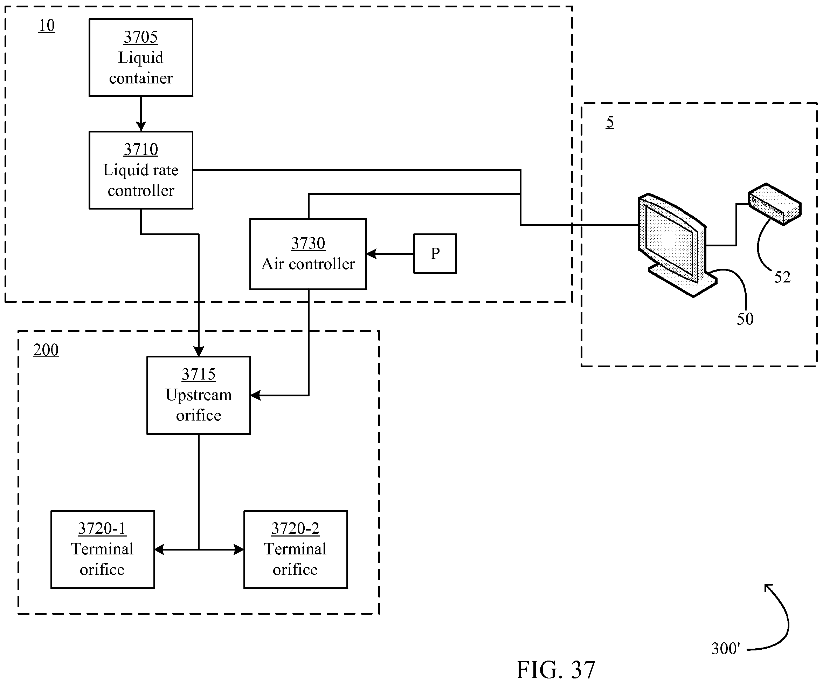

Referring to FIG. 37, an embodiment 300' of the system 300 of FIG. 3 is illustrated additionally including apparatus and systems for applying liquid to a trench or trenches (e.g., side trenches opened in the sidewalls of one or more planting trenches opened by planting row units 200). A processor such as implement monitor 50 is preferably in data communication (e.g., electrical or wireless communication) with one or more liquid rate controllers 3710 configured to control the flow rate and/or pressure at which liquid is dispensed from a liquid container 3705 which may be supported by the implement 10. The liquid rate controller may comprise a variable rate pump and/or a fluid control valve. The liquid container 3705 is preferably in fluid communication with a plurality of row units 200, preferably via the liquid rate controller 3710. The system 300 may include one liquid rate controller in fluid communication with all or a subset (e.g., a planter section) of the row units 200 supported on the toolbar 14. In other embodiments, a separate liquid controller may be associated with each row unit 200 for controlling the flow rate and/or pressure of liquid application at that row unit; in such embodiments, each liquid controller may be mounted to its associated row unit. In operation of the system 300', the liquid rate controller or controllers 3710 preferably varies the application rate as the implement traverses the field based on a prescription map associating desired application rates with locations (e.g., geo-referenced locations, rasters, management zones, polygons) in the field. In some such embodiments, locations in the field having common soil type or other soil characteristic may be associated with common flow rates.

Continuing to refer to FIG. 37, the system 300' may further include one or more orifices for controlling the rate of liquid application. The orifices are preferably removable and replaceable by the operator, e.g., to select a different rate of liquid application. In some embodiments, the liquid rate controller 3710 is in fluid communication with an upstream orifice 3710. The upstream orifice 3715 may comprise a replaceable orifice plate selected from a group of orifice plates having varying orifice widths (e.g., those available from Schaffert Mfg. Co. in Indianola, Nebraska or TeeJet in Wheaton, Illinois). In other embodiments, the upstream orifice 3715 may comprise a replaceable flexible tube selected from a group of flexible tubes having varying inner diameters. In some embodiments, the liquid rate controller 3710 is in fluid communication with one or more terminal orifices 3720. The terminal orifices may be disposed at a terminal end of a fluid transmission line (e.g., flexible tube); for example, liquid may exit the terminal orifices 3720 directly into the trench or side trench. In some embodiments, the terminal orifices 3720 may comprise the liquid injection needles 3150 (see FIG. 36), which may be selected from a group of injection needles having varying inner diameters. In some embodiments, the terminal orifices 3720 may comprise removable orifices disposed at or near the terminal ends of the injection needles 3150. In some embodiments, the terminal orifices may comprise the smallest orifice in the system 300'.

Continuing to refer to FIG. 37, in some embodiments the system 300' may further include an air controller 3730 for selectively directing and/or varying the rate of air flow from an air pressure source P (e.g., an impeller such as a blower used to supply seed from a bulk fill tank to the row units 200) to the row units 200 (e.g., through the upstream orifice 3715 or the terminal orifices 3720). The air controller 3700 may comprise a shutoff valve and/or a flow control valve. The monitor 50 is preferably in data communication with the air controller 3730 and preferably selectively opens and/or varies the rate of air flow to the row unit 200 (e.g., to the firmer 3100). In operation, the air controller 3730 may be opened or a flow rate selected based on a manual input, e.g., an input into the GUI of the monitor 50. In other embodiments, the air controller 3730 may be opened or a flow rate selected upon identification of a predetermined event (e.g., a time period, activation of the liquid rate controller, deactivation of the liquid rate controller, or a signal from the liquid rate controller or flow sensor indicating flow rates through one or more upstream orifices 3715 and/or terminal orifices 3720).

The foregoing description is presented to enable one of ordinary skill in the art to make and use the invention and is provided in the context of a patent application and its requirements. Various modifications to the preferred embodiment of the apparatus, and the general principles and features of the system and methods described herein will be readily apparent to those of skill in the art. Thus, the present invention is defined by the appended claims.

## Claims

1. A liquid application apparatus for applying liquid to soil during a planting operation, comprising:
a seed firmer (2700, 3100) mounted to a planter row unit (200), the planter row unit (200) having an opening system (234) and a closing system (236), the opening system (234) comprising two opening disks (244) rollingly mounted to a downwardly-extending shank (254) and configured to open a v-shaped planting trench (38) defined by first and second sidewalls in the soil (40), the closing system (236) including one or more closing wheels pivotally coupled to the row unit (200) and configured to close the planting trench (38) opened by the opening system (234), the planter row unit (200) depositing seeds in the open planting trench (38) forward of the closing system (236) and between said first and second sidewalls as the planter row unit (200) traverses the field, the seed firmer (2700, 3100) resiliently engaging a bottom portion of said open planting trench (38) after the seeds are deposited and forward of said closing system , said seed firmer (2700, 3100) having a first wing (2730-1, 3132-1) disposed to open a first transversely-extending side trench (37-1) in said first sidewall as the planter row unit (200) traverses the field; and
a first liquid injection conduit (2734-1, 3152-1) mounted to said seed firmer (2700, 3100) and disposed to inject liquid into said first transversely-extending side trench (37-1) after the seeds are deposited and forward of the closing system (236),
wherein the seed firmer (2700, 3100) has a firmer body (2710, 3110) including:
a tail portion (3114);
a flexible portion (2720, 3112) for maintaining a resilient downward force on the tail portion (3114) as the seed firmer (2700, 3100) traverses the soil; and
a ground-engaging portion (3120) mounted to the tail portion (3114) and disposed to engage the planting trench (38) and firm the previously deposited seeds at the bottom of the planting trench (38) into the soil forward of the closing system (236);
wherein an outlet of said first liquid injection conduit (2734-1, 3152-1) is laterally spaced from a transverse center of said firmer body (2710, 3110) by a distance to avoid burning the previously deposited seeds at the bottom of the planting trench when the liquid is injected by said first liquid injection conduit (2734-1, 3152-1).

2. The liquid application apparatus of claim 1 wherein said seed firmer (2700, 3100) includes a second wing (2730-2, 3132-2) disposed to open a second transversely-extending side trench (37-2) in said second sidewall as the planter row unit (200) traverses the filed, and further comprising a second liquid injection conduit (2734-2, 3152-2) mounted to said seed firmer (2700, 3100) and disposed to inject liquid into said second transversely-extending side trench (37-2).

3. The liquid application apparatus of claim 2, further comprising:
a liquid manifold (3140) mounted to said seed firmer (3100), said liquid manifold (3140) having an inlet (3142), a first outlet (3144-1) and a second outlet (3144-2), wherein said first outlet (3144-1) is in fluid communication with said first liquid injection conduit (3152-1), wherein said second outlet (3144-2) is in fluid communication with said second liquid injection conduit (3152-2), and wherein said inlet (3142) is configured to be placed in fluid communication with a liquid source.

4. The liquid application apparatus of claim 1, further comprising:
a reflectivity sensor (2732) mounted to said seed firmer (2700, 3100).

5. The liquid application apparatus of claim 1, further comprising:
an electrical conductivity sensor (2732) mounted to said seed firmer (2700, 3100).

6. The liquid application apparatus of claim 1, further comprising:
a temperature sensor (2732) mounted to said seed firmer (2700, 3100).

7. The liquid application apparatus of claim 1, wherein said liquid injection conduit (3152) comprises a hollow needle (3150).

8. The liquid application apparatus of claim 7, wherein said needle (3150) has a first internal diameter, wherein said needle is removably mounted to said seed firmer (3100) such that said needle (3150) may be replaced with a replacement needle (3150), said replacement needle (3150) having a second internal diameter, said second internal diameter being larger than said first internal diameter.

9. The liquid application apparatus of claim 1, further comprising:
a liquid rate controller (3710) in fluid communication with a liquid container (3705) and said liquid injection conduit (3152), said liquid rate controller (3710) configured to modify a rate of liquid application through said liquid injection conduit (3152).

10. The liquid application apparatus of claim 9, further comprising:
an implement monitor (50) in data communication with said liquid rate controller (3710), said implement monitor (50) commanding a liquid application rate to said liquid rate controller (3710);
a global positioning receiver (52) in data communication with said implement monitor (50), wherein said implement monitor (52) is configured to select a liquid application rate based on a position reported by the global positioning receiver (52).

11. The liquid application apparatus of claim 9, further comprising:
a replaceable orifice (3715, 3720) in fluid communication with said liquid container (3705) and said liquid injection conduit (3152).

12. The liquid application apparatus of claim 11, wherein said replaceable orifice (3715) is disposed upstream of said liquid injection conduit (3152).

13. The liquid application apparatus of claim 11, wherein said replaceable orifice (3720) is disposed at a terminal end of said liquid injection conduit (3152).

## Patentansprüche

1. Flüssigkeitsaufbringungsvorrichtungen zum Aufbringen von Flüssigkeit auf Erdreich während eines Pflanzvorgangs, mit:
einem Saatgutbefestiger (2700, 3100), der an einer Pflanzerreiheneinheit (200) montiert ist, wobei die Pflanzerreiheneinheit (200) ein Öffnungssystem (234) und ein Schließsystem (236) aufweist, wobei das Öffnungssystem (234) zwei Öffnungsscheiben (244) aufweist, die rollend an einem sich nach unten erstreckenden Schaft (254) montiert und konfiguriert sind, um einen v-förmigen Pflanzgraben (38) zu öffnen, der durch eine ersten Seitenwand und eine zweite Seitenwand in dem Erdreich (40) definiert ist, wobei das Schließsystem (236) ein oder mehrere Schließräder aufweist, die schwenkbar mit der Reiheneinheit (200) gekoppelt und konfiguriert sind, um den Pflanzgraben (38) zu schließen, der durch das Öffnungssystem (234) geöffnet wurde, wobei die Pflanzerreiheneinheit (200) Saatgut vor dem Schließsystem (136) in dem geöffneten Pflanzgraben (38) und zwischen der ersten Seitenwand und der zweiten Seitenwand ablegt, während die Pflanzerreiheneinheit (200) das Feld überquert, wobei der Saatgutbefestiger (2700, 3100) nachgiebig in einen unteren Bereich des geöffneten Pflanzgrabens (38) eingreift, nachdem das Saatgut abgelegt wurde und vor dem Schließsystem, wobei der Saatgutbefestiger (2700, 3100) einen ersten Flügel (2730-1, 3132-1) aufweist, der angeordnet ist, um einen ersten sich quer erstreckenden Seitengraben (37-1) in der ersten Seitenwand öffnen, während die Pflanzerreiheneinheit (200) das Feld überquert; und
einer ersten Flüssigkeitseinspritzleitung (2734-1, 3152-1), die an dem Saatgutbefestiger (2700, 3100) montiert und angeordnet ist, um Flüssigkeit in den ersten sich quer erstreckenden Seitengraben (37-1) einzuspritzen, nachdem das Saatgut abgelegt wurde und vor dem Schließsystem (236),
wobei der Saatgutbefestiger (2700, 3100) einen Befestigerkörper (2710, 3110) mit dem Folgenden aufweist:
einem Heckbereich (3114);
einem flexiblen Bereich (2720, 3112) zum Aufrechterhalten einer nachgiebigen nach unten gerichteten Kraft auf den Heckbereich (3114), während der Saatgutbefestiger (2700, 3100) das Feld überquert; und
einem in den Boden eingreifenden Bereich (3120), der an dem Heckbereich (3114) montiert und angeordnet ist, um in den Pflanzgraben (38) einzugreifen und das zuvor abgelegte Saatgut vor dem Schließsystem (236) am Boden des Pflanzgrabens (38) im Erdreich zu befestigen;
wobei ein Auslass der ersten Flüssigkeitseinspritzleitung (2734-1, 3152-1) um einen Abstand seitlich beabstandet zu einem Quermittelpunkt des Saatgutbefestigers (2700, 3100) ist, um eine Überdüngung des zuvor auf dem Boden des Pflanzgrabens abgelegten Saatguts zu verhindern, wenn die Flüssigkeit durch die erste Flüssigkeitseinspritzleitung (2734-1, 3152-1) eingespritzt wird.

2. Flüssigkeitsaufbringungsvorrichtungen nach Anspruch 1, wobei der Saatgutbefestiger (2700, 3100) einen zweiten Flügel (2730-2, 3132-2) aufweist, der angeordnet ist, um einen zweiten sich quer erstreckenden Seitengraben (37-2) in der zweiten Seitenwand zu öffnen, während die Pflanzerreiheneinheit (200) das Feld überquert, und weiterhin mit einer zweiten Flüssigkeitseinspritzleitung (2734-2, 3152-2), die an dem Saatgutbefestiger (2700, 3100) montiert und angeordnet ist, um Flüssigkeit in den zweiten sich quer erstreckenden Seitengraben (37-2) einzuspritzen.

3. Flüssigkeitsaufbringungsvorrichtungen nach Anspruch 2, weiterhin mit:
einem Flüssigkeitsverteiler (3140), der an dem Saatgutbefestiger (3100) montiert ist, wobei der Flüssigkeitsverteiler (3140) einen Einlass (3142), einen ersten Auslass (3144-1) und einen zweiten Auslass (3144-2) aufweist, bei sich der erste Auslass (3144-1) in einer Flüssigkeitsverbindung mit der ersten Flüssigkeitseinspritzleitung (3152-1) befindet, wobei sich der zweite Auslass (3144-2) einer Flüssigkeitsverbindung mit dem zweiten Flüssigkeitseinspritzleitung (3152-2) befindet, und wobei der Einlass (3142) konfiguriert ist, um in eine Flüssigkeitsverbindung mit einer Flüssigkeitsquelle gebracht zu werden.

4. Flüssigkeitsaufbringungsvorrichtungen nach Anspruch 1, weiterhin mit:
einem Reflektivitätssensor (2732), der an dem Saatgutbefestiger (2700, 3100) montiert ist.

5. Flüssigkeitsaufbringungsvorrichtungen nach Anspruch 1, weiterhin mit:
einem elektrischen Leitfähigkeitssensor (2732), der an dem Saatgutbefestiger (2700, 3100) montiert ist.

6. Flüssigkeitsaufbringungsvorrichtungen nach Anspruch 1, weiterhin mit:
einem Temperatursensor (2732), der an dem Saatgutbefestiger (2700, 3100) montiert ist.

7. Flüssigkeitsaufbringungsvorrichtungen nach Anspruch 1, wobei die Flüssigkeitseinspritzleitung (3152) eine Hohlnadel (3150) aufweist.

8. Flüssigkeitsaufbringungsvorrichtungen nach Anspruch 7, wobei die Nadel (3150) einen ersten Innendurchmesser aufweist, wobei die Nadel so entfernbar an dem Saatgutbefestiger (3100) montiert ist, dass die Nadel (3150) durch eine Ersatznadel (3150) ersetzt werden kann, wobei die Ersatznadel (3150) einen zweiten Innendurchmesser besitzt, wobei der zweite Innendurchmesser größer als der erste Innendurchmesser ist.

9. Flüssigkeitsaufbringungsvorrichtungen nach Anspruch 1, weiterhin mit:
einem Flüssigkeitsdurchsatzregler (3710), der sich in einer Flüssigkeitsverbindung mit einem Flüssigkeitsbehälter (3705) und der Flüssigkeitseinspritzleitung (3152) befindet, wobei der Flüssigkeitsdurchsatzregler (3710) konfiguriert ist, um einen Durchsatz der aufzubringen Flüssigkeit durch die Flüssigkeitseinspritzleitung (3152) zu verändern.

10. Flüssigkeitsaufbringungsvorrichtungen nach Anspruch 9, weiterhin mit:
einem Anbaugerätmonitor (50), der sich in einer Datenverbindung mit dem Flüssigkeitsdurchsatzregler (3710) befindet, wobei der Anbaugerätmonitor (50) dem Flüssigkeitsdurchsatzregler (3710) eine Flüssigkeitsaufbringungsrate befiehlt.

11. Flüssigkeitsaufbringungsvorrichtungen nach Anspruch 9, weiterhin mit:
einer austauschbaren Düse (3715, 3720), die sich in einer Flüssigkeitsverbindung mit dem Flüssigkeitsbehälter (3705) und der Flüssigkeitseinspritzleitung (3152) befindet.

12. Flüssigkeitsaufbringungsvorrichtungen nach Anspruch 11, wobei die austauschbare Düse (3715) stromaufwärts der Flüssigkeitseinspritzleitung (3152) angeordnet ist.

13. Flüssigkeitsaufbringungsvorrichtungen nach Anspruch 11, wobei die austauschbare Düse (3720) an einem terminalen Ende der Flüssigkeitseinspritzleitung (3152) angeordnet ist.

## Revendications

1. Dispositif d'application de liquide destiné à appliquer un liquide sur le sol au cours d'une opération de plantation, comprenant :
un élément de compactage de graine (2700, 3100) monté sur une unité de plantation en sillon (200), l'unité de plantation en sillon (200) comportant un dispositif d'ouverture (234) et un dispositif de fermeture (236), le dispositif d'ouverture (234) comprenant deux disques d'ouverture (244) montés de manière à pouvoir rouler sur un pied s'étendant vers le bas (254) et configurés de manière à ouvrir une tranchée de plantation en forme de V (38) définie par des première et seconde parois latérales dans le sol (40), le dispositif de fermeture (236) comportant une ou plusieurs roues de fermeture couplées de manière à pouvoir pivoter à l'unité de sillon (200) et configurées de manière à refermer la tranchée de plantation (38) ouverte par le dispositif d'ouverture (234), l'unité de plantation en sillon (200) déposant des graines dans la tranchée de plantation (38) ouverte à l'avant du dispositif de fermeture (236) et entre lesdites première et seconde parois latérales à mesure que l'unité de plantation en sillon (200) traverse le champ, l'élément de compactage de graine (2700, 3100) se couplant de manière souple à une partie inférieure de ladite tranchée de plantation (38) ouverte après que les graines ont été déposées et que ledit dispositif de fermeture a été avancé, ledit élément de compactage de graine (2700, 3100) comportant une première aile (2730-1, 3132-1) agencée de manière à ouvrir une première tranchée latérale s'étendant transversalement (37-1) dans ladite première paroi latérale à mesure que l'unité de plantation en sillon (200) traverse le champ ; et
un premier conduit d'injection de liquide (2734-1, 3152-1) monté sur ledit élément de compactage de graine (2700, 3100) et disposé de manière à injecter un liquide dans ladite première tranchée latérale s'étendant transversalement (37-1) après que les graines ont été déposées et que ledit dispositif de fermeture (236) a été avancé,
dans lequel l'élément de compactage de graine (2700, 3100) comporte un corps de compactage (2710, 3110) comportant :
une partie de queue (3114) ;
une partie flexible (2720, 3112) destinée à maintenir un effort élastique vers le bas sur la partie de queue (3114) à mesure que l'élément de compactage de graine (2700, 3100) traverse le sol ; et
une partie de couplage de sol (3120) montée sur la partie de queue (3114) et disposée de manière à se coupler à la tranchée de plantation (38) et à tasser les graines précédemment déposées au fond de la tranchée de plantation (38) dans le sol à l'avant du dispositif de fermeture (236) ;
dans lequel une sortie dudit premier conduit d'injection de liquide (2734-1, 3152-1) est espacée latéralement par rapport à un centre transversal dudit corps de compactage (2710, 3110) sur une distance permettant d'éviter de brûler les graines précédemment déposées au fond de la tranchée de plantation lorsque le liquide est injecté par ledit premier conduit d'injection de liquide (2734-1, 3152-1).

2. Dispositif d'application de liquide selon la revendication 1, dans lequel ledit élément de compactage de graine (2700, 3100) comporte une seconde aile (2730-2, 3132-2) disposée de manière à ouvrir une seconde tranchée latérale s'étendant transversalement (37-2) sur ladite seconde paroi latérale à mesure que l'unité de plantation en sillon (200) traverse le champs et comprenant, en outre, un second conduit d'injection de liquide (2734-2, 3152-2) monté sur ledit élément de compactage de graine (2700, 3100) et disposé de manière à injecter un liquide dans ladite seconde tranchée latérale s'étendant transversalement (37-2).

3. Dispositif d'application de liquide selon la revendication 2, comprenant, en outre :
un collecteur de liquide (3140) monté sur ledit élément de compactage de graine (3100), ledit collecteur de liquide (3140) comportant une entrée (3142), une première sortie (3144-1) et une seconde sortie (3144-2), dans lequel ladite première sortie (3144-1) est en communication fluidique avec ledit premier conduit d'injection de liquide (3152-1), dans lequel ladite seconde sortie (3144-2) est en communication fluidique avec ledit second conduit d'injection de liquide (3152-2), et dans lequel ladite entrée (3142) est configurée de manière à être placée en communication fluidique avec une source de liquide.

4. Dispositif d'application de liquide selon la revendication 1, comprenant, en outre :
un capteur de réflectivité (2732) monté sur ledit élément de compactage de graine (2700, 3100).

5. Dispositif d'application de liquide selon la revendication 1, comprenant, en outre :
un capteur de conductivité électrique (2732) monté sur ledit élément de compactage de graine (2700, 3100).

6. Dispositif d'application de liquide selon la revendication 1, comprenant, en outre :
un capteur de température (2732) monté sur ledit élément de compactage de graine (2700, 3100).

7. Dispositif d'application de liquide selon la revendication 1, dans lequel ledit conduit d'injection de liquide (3152) comprend une aiguille creuse (3150).

8. Dispositif d'application de liquide selon la revendication 7, dans lequel ladite aiguille (3150) présente un premier diamètre interne, dans lequel ladite aiguille est montée de manière amovible sur ledit élément de compactage de graine (3100) de telle sorte que ladite aiguille (3150) peut être remplacée par une aiguille de rechange (3150), ladite aiguille de rechange (3150) présentant un second diamètre interne, ledit second diamètre interne étant supérieur audit premier diamètre interne.

9. Dispositif d'application de liquide selon la revendication 1, comprenant, en outre :
un contrôleur de débit de liquide (3710) en communication fluidique avec un conteneur de liquide (3705) et ledit conduit d'injection de liquide (3152), ledit contrôleur de débit de liquide (3710) étant configuré de manière à modifier un débit d'application de liquide à travers ledit conduit d'injection de liquide (3152).

10. Dispositif d'application de liquide selon la revendication 9, comprenant, en outre :
un dispositif de contrôle d'outillage (50) en communication numérique avec ledit contrôleur de débit de liquide (3710), ledit dispositif de contrôle d'outillage (50) commandant un débit d'application de liquide audit contrôleur de débit de liquide (3710) ;
un récepteur de positionnement global (52) en communication numérique avec ledit dispositif de contrôle d'outillage (50), dans lequel ledit dispositif de contrôle d'outillage (52) est configuré de manière à sélectionner un débit d'application de liquide sur la base d'une position rapportée par le récepteur de positionnement global (52).

11. Dispositif d'application de liquide selon la revendication 9, comprenant, en outre :
un orifice pouvant être remplacé (3715, 3720) en communication fluidique avec ledit conteneur de liquide (3705) et ledit conduit d'injection de liquide (3152).

12. Dispositif d'application de liquide selon la revendication 11, dans lequel ledit orifice pouvant être remplacé (3715) est disposé en amont dudit conduit d'injection de liquide (3152).

13. Dispositif d'application de liquide selon la revendication 11, dans lequel ledit orifice pouvant être remplacé (3720) est disposé au niveau d'une extrémité terminale dudit conduit d'injection de liquide (3152).
